# FASCICULE DE BREVET EUROPEEN

(11) **EP 1 313 827 B1**
(45) Date de publication et mention de la délivrance du brevet: **26.11.2008**
(21) Numéro de dépôt: 01963084.7
(22) Date de dépôt: 09.08.2001
(51) Int. Cl.: C10M 169/00, E21B 17/042, F16B 33/06

(54) **ELEMENT FILETE POUR JOINT FILETE TUBULAIRE RESISTANT AU GRIPPAGE**
MIT EINEM GEWINDE VERSEHENES RÖHRFÖRMIGES ELEMENT FÜR GEGEN EIN FESTLAUFEN BESTÄNDIGE VERSCHRAUBBARE ROHRVERBINDUNG
THREADED COMPONENT FOR SEIZURE-RESISTANT TUBULAR THREADED JOINT

(30) Priorité: 31.08.2000 FR 0011127
(43) Date de publication de la demande: 28.05.2003
(73) Titulaire: VALLOUREC MANNESMANN OIL & GAS FRANCE, 59620 Aulnoye-Aymeries (FR)
(72) Inventeur: BERTET, Régis, F-38200 Luzinay (FR); CHAMBELLANT, François, F-69100 Villeurbanne (FR); PETELOT, Daniel, F-59550 Taisnières en Thierache (FR); TRUONG DINH, Nguyen, F-69440 Taluyers (FR); VERDILLON, Lionel, F-69380 Dommartin (FR)
(74) Mandataire: Pellicani, Félix Angelo
(86) Numéro de dépôt international: PCT/FR2001/002588
(87) Numéro de publication internationale: WO 2002/018522

(56) Documents cités:
- WO-A-93/06197
- FR-A- 2 597 117
- GB-A- 1 033 735
- GB-A- 1 086 720
- US-A- 2 065 247
- US-A- 2 419 144
- US-A- 3 095 375
- US-A- 3 526 593
- US-A- 4 414 247
- US-A- 5 275 845
- "API Recommended Practice 5A3 "Recommended Practice on Thread Compounds for Casing, Tubing and Line Pipe"" 1996, AMERICAN PETROLUEM INSTITUTE , WASHINGTON DC * page 3 - page 9 *
- "API Recommended Practice 5C1 "Recommended Practice for Care and Use of Casing and Tubing"" 1999, AMERICAN PETROLEUM INSTITUTE , WASHINGTON DC * page 1 - page 19 *

## Description

L'invention concerne les éléments filetés mâles ou femelles disposés en extrémité de tubes et destinés à être assemblés par vissage pour constituer des joints filetés tubulaires résistant au grippage et plus particulièrement ceux destinés à être vissés sans adjonction manuelle de graisse.

On connaît de tels éléments filetés et joints filetés tubulaires utilisés notamment pour constituer des colonnes de tubes de cuvelage ou de production ou des trains de tiges de forage pour des puits d'hydrocarbures ou pour des puits similaires, tels que, par exemple, des puits pour la géothermie.

De tels types de tubes sont généralement assemblés verticalement, l'extrémité libre de la colonne en surface comportant un élément fileté femelle avec un filetage intérieur femelle.

Pour pouvoir descendre la colonne dans le puits, on présente un nouveau tube au-dessus de la colonne muni d'un élément fileté mâle comportant un filetage extérieur mâle correspondant au filetage femelle en extrémité libre correspondant de la colonne, on engage le filetage mâle du nouveau tube dans le filetage femelle correspondant de la colonne et on visse le nouveau tube jusqu'à atteindre un niveau de couple de vissage ou un repère donnés. On peut alors ensuite descendre la colonne de la longueur du tube qui y a été assemblé et recommencer le processus.

Compte tenu de la longueur des tubes, environ 10 m, il n'est pas facile d'engager de manière parfaitement coaxiale le nouveau tube avec le haut de la colonne. Aussi les filetages souffrent-ils énormément durant l'assemblage et plus particulièrement les flancs d'engagement des filets mâles et femelles qui reposent l'un sur l'autre durant l'engagement et sont en contact glissant durant une grande partie du vissage. Les flancs d'engagement des filets sont de ce fait très sensibles au phénomène de grippage qui peut se manifester sinon au premier vissage du moins aux vissages suivants, un joint fileté tubulaire devant être apte à être vissé et dévissé de multiples fois sans présenter de grippage.

Le grippage peut également se manifester au niveau de portées d'étanchéité "métal-métal" présentes sur les éléments filetés des joints filetés tubulaires dit "supérieurs", ces portées d'étanchéité étant en contact glissant sous pression de contact croissante jusqu'à la position finale de vissage.

Il en est de même pour les surfaces de butée qui entrent en contact en fin de vissage.

Aussi est-il exclu de constituer des surfaces de contact glissant purement métal-métal au niveau tant des filetages que des portées d'étanchéité ou des butées si le joint fileté en est muni car la constitution de telles surfaces entraînerait immanquablement un grippage inacceptable.

La solution classiquement utilisée depuis très longtemps est l'interposition d'une graisse entre les surfaces métalliques en contact glissant, cette graisse étant déposée en paquet sur l'élément fileté.

La graisse très généralement utilisée est la graisse API type 5A2 ou 5A3 spécifiée par l'American Petroleum Institute (API) qui est un mélange hétérogène d'une graisse et de particules de graphite et de métaux Pb, Zn et Cu possédant à la fois des propriétés d'anti-grippage et colmatage des jeux entre filets mâles et femelles.

Une telle graisse présente néanmoins un certain nombre d'inconvénients.

L'inconvénient premier de la graisse API lié à sa nature est sa teneur en plomb, élément particulièrement nocif pour la santé et pour l'environnement.

Une telle graisse possède également d'autres inconvénients dont plusieurs sont communs à toutes les graisses.

Compte tenu de ses caractéristiques, la graisse est généralement apportée au pinceau ou à la brosse sur les surfaces de contact des éléments filetés. On veille à ce qu'une quantité minimale de graisse mesurée par un volume minimal ou une masse minimale soit apportée sur ces surfaces : ainsi la société Vallourec Mannesmann Oil & Gas France spécifie-t-elle dans le livret VAM^{®} Running Book édité par elle-même en juillet 1996 à destination de ses clients un volume d'au moins 25 cm³ ou une masse d'au moins 42 g. de graisse API Bul 5A2 pour l'enduction des surfaces de contact des éléments filetés mâles et femelles de joints filetés VAM^{®} TOP de diamètre extérieur 7" (177,8 mm).

Il s'ensuit une certaine variabilité des quantités de graisse apportée sur les éléments filetés :
a) selon les opérateurs chargés de l'enduction de graisse, notamment sur chantier,
b) pour un même opérateur, d'un élément fileté à un autre et
c) pour un même élément fileté, d'un point de l'élément fileté à un autre.

L'opération de vissage distribue la graisse dans les jeux entre filets mâles et femelles correspondants, ces jeux variant aléatoirement d'un joint fileté à l'autre du fait des tolérances de fabrication des éléments filetés, et conduit à éjecter les surplus de graisse du joint fileté.

Sur certains types de joint fileté, la difficulté à évacuer les surplus de graisse peut se traduire par la constitution de pressions très élevées sur les filets lors du vissage susceptibles de fausser la mesure du couple de vissage, voire de déformer les filets et les portées d'étanchéité voire sur des filetages coniques (qui sont préconisés par l'API et sont de ce fait très utilisés) conduire en cas d'apport excessif à un déboîtement des filetages avec chute catastrophique de la colonne au fond du puits.

En outre, les surplus de graisse éjectés durant le vissage viennent s'accumuler au fond du puits en grande quantité compte tenu du nombre de joints filetés mis en oeuvre et viennent colmater les pores de la roche réservoir, pores que les hydrocarbures doivent traverser avant d'être recueillis par les tubes de production. Un tel colmatage grève considérablement le coût d'exploitation des puits d'hydrocarbures.

De plus, certaines graisses dont la graisse API 5A2 ou 5A3 n'offrent pas une protection anticorrosion suffisante compte tenu de leur composition et des conditions et de la durée du transport et/ou du stockage des tubes avant utilisation.

Il est alors nécessaire d'appliquer en atelier de fabrication sur les surfaces de contact des éléments filetés une graisse spécifique pour le transport et le stockage, une fois sur chantier d'éliminer cette graisse juste avant l'assemblage des tubes et d'appliquer une graisse finale type API 5A2 pour le vissage.

De nombreux autres types de graisse avec ou sans plomb sont décrits dans des brevets pour des assemblages filetés.

Ces graisses sont souvent hétérogènes, étant chargées de particules métalliques, minérales ou thermoplastiques pour colmater les jeux entre filets mâles et femelles (GB 1086720, US 3526593) et/ou pour éviter le grippage au vissage (US 2065247, US 5275845) ou au dévissage (GB 1033735, US 2419144).

Les vertus antigrippantes de certaines des graisses décrites dans ces brevets peuvent résulter de la présence dans ces graisses d'additifs extrême pression agissant de manière chimique : US 2065247, US 3095375, WO 93/06197.

Mais ces brevets sont relatifs à des graisses qui présentent par conséquent les inconvénients de toutes les graisses signalés ci-dessus pour les graisses API 5A2 ou 5A3 qui sont appliquées au pinceau.

Des revêtements à consistance solide appliqués par le fabricant de tubes sur les filets et les portées ont ensuite vu le jour permettant de visser "à sec" les joints filetés sans application ultérieure de lubrifiant sur chantier.

De tels revêtements peuvent être de type métallique tels ceux décrits dans le brevet EP 632225 qui mettent en oeuvre une couche externe de plomb ou à base d'oxydes métalliques tels que ceux décrits dans le brevet EP 500 482 qui mettent en oeuvre une couche externe d'oxyde de plomb, mais on retrouve dans ces revêtements la présence non désirée de plomb ou de composés de plomb.

De tels revêtements peuvent être aussi une peinture ou un vernis de glissement.

La demande de brevet EP 786 616 décrit une méthode de réalisation d'un tel vernis de glissement sur un élément fileté, méthode qui comprend le dépôt préalable d'une couche mince (0,005 à 0,030 mm) de.phosphate puis d'une couche de 0,010 à 0,045 mm d'épaisseur d'un mélange de résine synthétique du genre époxy ou autre et de bisulfure de molybdène ou de tungstène et la polymérisation de la résine par chauffage.

Le brevet US 4414247 décrit lui aussi une méthode voisine de réalisation d'un vernis de glissement sur un élément fileté.

De tels vernis de glissement présentent d'excellentes propriétés antigrippantes tant qu'ils sont présents. Mais, en tant que vernis solides, ils s'usent et ne sont pas régénérés au fur et à mesure des vissages-dévissages. Aussi constate-t-on après plusieurs vissages-dévissages sur des joints filetés munis de tels revêtements un grippage qui est alors de type brutal et catastrophique.

En outre, si un tel vernis de glissement est localement détérioré lors du transport ou du stockage des tubes, il n'est pas possible de réparer localement la couche de vernis.

On a cherché à obtenir par la présente invention un élément fileté mâle ou femelle pour joint fileté tubulaire particulièrement résistant au grippage, comportant un filetage mâle ou femelle selon le type de l'élément fileté, qui, étant muni d'une couche lubrifiante sur les surfaces destinées à être des surfaces de contact, soit exempt des inconvénients précités.

On a particulièrement cherché à ce que l'élément fileté selon l'invention puisse être vissé ou dévissé 10 fois avec un élément fileté de type opposé sans présenter de grippage dans des conditions sévères d'exploitation de puits d'hydrocarbures avec des pressions de Hertz mises en oeuvre pouvant être supérieures à 300 MPa entre les surfaces glissantes en contact, des vitesses de glissement de 0,1 m/s et des longueurs de glissement pouvant atteindre le mètre.

On a aussi particulièrement cherché à éviter les grippages catastrophiques conduisant brutalement à une dégradation inacceptable des surfaces en contact et obligeant à chuter et à réusiner les éléments filetés.

On a, en outre, cherché à ce que l'élément fileté ne libère pas de substance dangereuse pour l'environnement tel que par exemple du plomb ou des métaux lourds.

On a en outre cherché à ce que l'élément fileté puisse être utilisé avec le même succès aussi bien dans des régions arctiques que dans des régions tropicales ou équatoriales et après des séjours en fond de puits à des températures pouvant atteindre ou dépasser 160° C.

On a en outre cherché à ce que l'élément fileté puisse normalement être utilisé sur chantier de forage ou de production de puits sans application de lubrifiant à ce stade, le lubrifiant nécessaire étant appliqué à l'atelier de fabrication de l'élément fileté.

On a, en outre, cherché à ce que les parties de l'élément fileté destinées à être en contact glissant lors du vissage et recouvertes en atelier de lubrifiant ne puissent être corrodées durant le transport et le stockage.

On a aussi cherché à ce que le dépôt de lubrifiant réalisé en atelier puisse éventuellement être réparé sur chantier.

On a, bien sûr, cherché à ce que ces propriétés soient obtenues à un coût relativement bas.

On a, en outre, cherché à ce que l'élément fileté puisse être utilisé avec succès tant avec un élément fileté opposé également selon l'invention qu'avec un élément fileté opposé compatible du commerce.

On a cherché aussi à ce que les mêmes performances antigrippantes puissent être obtenues sur des éléments filetés comprenant outre un filetage, une ou plusieurs portées d'étanchéité "métal-métal" et/ou au moins une butée de vissage.

On a aussi cherché à ce que les mêmes performances antigrippantes puissent être obtenues sur des éléments filetés pour joints filetés tubulaires intégraux ou manchonnés, comportant toutes sortes de filetages (coniques, cylindriques, à simple étage ou à plusieurs étages, etc.) avec toutes sortes de formes de filets (triangulaires, trapézoïdaux, etc.) à largeur de filet constante ou variable (filets coins).

Selon l'invention, l'élément fileté mâle ou femelle comprend un filetage, respectivement mâle ou femelle, une substance lubrifiante étant déposée en couche mince au moins sur la surface des filets du filetage, cette surface étant traitée pour adsorber ou absorber ladite substance lubrifiante.

Par couche mince de substance lubrifiante, on entend une couche d'épaisseur inférieure à 0,10 mm.

La substance lubrifiante utilisée est un mélange homogène :
a) d'un épaississant ;
b) d'au moins un additif extrême pression (EP) dont au moins un additif extrême pression à action chimique dit additif EP chimique et ;
c) d'une huile.

Par mélange homogène on entend de manière connue en soi une dispersion intime et stable des constituants, de manière à ce que la substance lubrifiante présente des propriétés identiques en tous points.

Les proportions des trois composants de la substance lubrifiante sont choisies pour que ladite substance lubrifiante possède une consistance apte à assurer un régime de lubrification auto-alimenté et un caractère filmogène.

La notion de régime de lubrification auto-alimenté est connue en soi pour caractériser le fait que, chez les substances lubrifiantes du type des huiles et de certaines graisses, la couche de substance lubrifiante n'est jamais détruite de manière irréversible mais « s'auto-guérit » ou « s'auto-cicatrise » au fur et à mesure qu'elle est cisaillée au cours du vissage.

Une telle caractéristique peut être obtenue pour une plage de consistance de la substance lubrifiante à température ambiante relativement large allant d'une consistance semi-solide semblable à celle d'un vernis très visqueux avant séchage à une consistance pâteuse ne coulant pas semblable à une cire.

Il est nécessaire de combiner les trois composants de la substance lubrifiante, épaississant, additif EP et huile, pour résoudre le problème posé. La substance lubrifiante peut toutefois accessoirement comporter d'autres substances, inactives du point de vue de la résistance au grippage, ajoutées dans d'autres buts (couleur de la couche par exemple).

L'épaississant, comme son nom l'indique, sert à donner à la substance lubrifiante un aspect épais, visqueux, consistant, pâteux mais fluide pour assurer un régime de lubrification auto-alimenté et des propriétés filmogènes. Il peut être également un liant des autres constituants de la substance lubrifiante.

On peut distinguer deux familles chimiques d'épaississant, les organiques et les minéraux :
a) épaississants organiques :
   On peut mettre en oeuvre à titre d'exemple non limitatif d'épaississant organique les cires pétrolières, animales ou végétales, les cires de petrolatum, les cires de petrolatum oxydées, les cires sulfonatées, les cires synthétiques ainsi que les mélanges de ces cires, les résines pétrolières tackifiantes, les bitumes, les polymères solubles ou dispersables dans l'huile, les savons liposolubles, etc. En plus des propriétés précitées, ce type d'épaississant peut avantageusement posséder une fonction de protection contre la corrosion de par ses caractéristiques chimiques et physiques,
b) épaississants minéraux :
   L'épaississant minéral pourra être de la silice calcinée hydrophobe, des bentones greffées hydrophobes ou du dioxyde de titane.

Les additifs extrême pression (EP) sont des substances bien connues dans le domaine des lubrifiants. Leurs performances peuvent être mesurées par des normes d'essai EP (test 4 billes, test Falex...).

Par définition, les additifs EP chimiques réagissent avec les parties métalliques en contact à partir d'une certaine température générée par les phénomènes de friction en créant un film lubrifiant chimique. Parmi les additifs EP chimiques, on connaît :
- les additifs EP chimiques à base de soufre ou contenant du soufre, tels que, par exemple, les hydrocarbures ou les esters soufrés commercialisés sous le nom de « produit soufré », les dithiocarbamates métalliques, les sulfonates métalliques neutres ou surbasés ;
- les additifs EP chimiques à base de phosphore tels que les acides ou les esters phosphoriques ;
- les additifs EP chimiques à base de soufre et de phosphore tels que les dithiophosphates métalliques, notamment ceux de zinc ;
- les additifs EP chimiques à base de chlore, notamment les paraffines chlorées ;
- les esters ou acides gras modifiés ou non, les esters complexes, etc.

Ces additifs EP chimiques sont en général produits et commercialisés dilués dans une huile minérale mais on entend dans la suite du présent document par additif EP chimique la substance active non diluée.

Le ou les additifs EP chimiques utilisés sont choisis parmi ceux connus pour permettre un fonctionnement sans grippage sous une pression de Hertz supérieure à égale à 1 000 MPa.

Ils sont aussi choisis pour être compatibles physiquement et chimiquement avec l'épaississant choisi : ils doivent ainsi être parfaitement miscibles avec l'épaississant mais ne doivent pas réagir avec celui-ci car leurs propriétés extrême pression seraient alors fortement diminuées.

Ces additifs EP chimiques peuvent être utilisés seuls ou en mélange de manière à alors profiter d'une synergie maximale de leurs performances.

On entend par huile dans la composition de la substance lubrifiante tant une huile spécifiquement ajoutée qu'une huile dans laquelle les épaississants et/ou les additifs EP, notamment les additifs EP chimiques, sont fournis dilués.

L'huile mise en oeuvre peut être une coupe de distillation de produits pétroliers dite encore « base minérale » mais également une base synthétique obtenue par réaction chimique telle que les polyalphaoléfines, les polyisobutènes, les esters, etc. Elle peut également être une base d'origine végétale (huile de colza, tournesol, etc.) ou animale. Elle peut encore être un mélange de ces bases.

Préférentiellement, le ou les additifs EP chimiques et l'épaississant sont solubles dans l'huile, ce qui permet de bien disperser le ou les additifs EP chimiques avec l'épaississant et d'obtenir une substance lubrifiante parfaitement homogène.

Préférentiellement, l'épaississant possède des molécules chimiques à caractère polaire marqué. Une telle caractéristique permet notamment de rendre la substance lubrifiante adhérente sur un substrat.

Préférentiellement, l'épaississant est stable chimiquement jusqu'à une température supérieure ou égale à 120°C et de préférence supérieure ou égale à 160°C.

Optionnellement, le ou les additifs EP comprend aussi au moins un additif EP à action physique, préférentiellement sous forme de particules solides submicroniques pour permettre l'obtention de la substance lubrifiante sous forme d'un mélange homogène.

Les additifs EP à action physique dits additifs EP physiques s'intercalent entre les surfaces en contact sous forme d'un film cisaillable dans des plans de clivage caractéristiques de leur structure cristalline et parallèles au plan du mouvement, ou dans des plans déformables facilement. Respectivement on peut trouver dans la première catégorie (clivage) le graphite, les bisulfures de molybdène, de tungstène ou d'étain, le nitrure de bore etc. et dans la seconde, les polymères du type PTFE, polyamide, polyurée, etc.

Préférentiellement, au moins un des composants de l'ensemble d'additifs EP possède des propriétés anticorrosion.

La teneur totale en additifs EP est préférentiellement comprise entre 5 et 75 % selon le ou les types d'additif EP mis en oeuvre.

Selon un premier mode de réalisation préférentiel, la teneur totale des additifs EP est comprise entre 5 % et 50 % et très préférentiellement entre 15 % et 32 % en poids.

Avantageusement selon ce premier mode de réalisation, la substance lubrifiante comprend plusieurs additifs EP chimiques, préférentiellement non chlorés.

Selon un premier sous-mode de réalisation de ce premier mode de réalisation, la teneur en épaississant dans la substance lubrifiante est comprise entre 5 % et 60 % en poids et préférentiellement entre 8 % et 40 % en poids ; il s'ensuit une teneur en huile dans la substance lubrifiante comprise entre 30 % et 75 % et préférentiellement entre 40 % et 60 % en poids.

Selon un second sous-mode de réalisation de ce premier mode de réalisation permettant d'avoir un dépôt de consistance plus solide, la teneur en épaississant dans la substance lubrifiante est comprise entre 60 % et 80 % en poids ; il s'ensuit une teneur en huile dans la substance lubrifiante comprise entre 5 % et 20 % en poids.

Selon un second mode de réalisation préférentiel selon laquelle le ou les additifs EP chimiques comprennent une paraffine chlorée, la teneur en épaississant dans la substance lubrifiante est comprise entre 25 % et 60 % en poids et la teneur totale en additifs EP dans la substance lubrifiante est comprise entre 40 % et 75 % ; il s'ensuit une teneur en huile dans la substance lubrifiante comprise entre 0,5 % et 15 % en poids.

Dans les différentes compositions du présent document, les teneurs en épaississant et celles en additifs EP correspondent aux teneurs en substances actives des constituants indiqués.

Préférentiellement, le poids de couche de substance lubrifiante sur l'élément fileté est compris entre 0,1 g/m² et 40 g/m².

En variante, la surface des filets du filetage, traitée pour adsorber ou absorber la substance lubrifiante est la surface d'une couche choisie parmi le groupe constitué par les couches de phosphatation, les couches d'oxalatation et les couches métalliques.

En variante, la surface des filets du filetage est traitée pour lui conférer une rugosité contrôlée de manière à adsorber ou absorber la substance lubrifiante. Un tel traitement peut par exemple être un sablage, un grenaillage, une gravure ou tout mode équivalent.

Préférentiellement, la surface des filets du filetage est traitée pour adsorber ou absorber la substance lubrifiante sur une profondeur comprise entre 0,003 mm et 0,080 mm.

Avantageusement, la substance lubrifiante est aussi déposée sur chaque surface de portée d'étanchéité lorsque l'élément fileté considéré comporte de telles portées d'étanchéité.

Avantageusement aussi, la substance lubrifiante est aussi déposée sur chaque surface de butée lorsque l'élément fileté considéré comporte de telles butées.

Avantageusement encore, toutes les surfaces sur lesquelles la substance lubrifiante est volontairement déposée en couche mince sont des surfaces traitées pour adsorber ou absorber la substance lubrifiante.

La présente invention vise aussi à protéger un joint fileté tubulaire résistant au grippage qui comprend un élément fileté mâle et un élément fileté femelle, chacun muni d'un filetage de type correspondant, les filetages étant vissés l'un dans l'autre en position d'assemblage, dans lequel au moins un des deux éléments filetés est un élément fileté selon l'invention précédemment décrite.

Selon une variante de ce joint fileté, un seul des deux éléments filetés est un élément fileté selon l'invention précédemment décrite, l'autre élément fileté comportant une couche mince de la substance lubrifiante précédemment définie déposée directement au moins sur la surface des filets du filetage, la substance lubrifiante étant un mélange homogène :
a) d'un épaississant ;
b) d'au moins un additif extrême pression, le ou les additifs extrême pression étant compatibles physiquement et chimiquement avec l'épaississant et comprenant au moins un additif extrême pression à action chimique dit additif EP chimique qui est apte à un usage à des pressions de Hertz supérieures ou égales à 1000 MPa et ;
c) d'une huile.

Par couche mince de substance lubrifiante directement déposée, on veut dire que la surface des filets considérés n'a pas été traitée pour adsorber ou absorber la substance lubrifiante.

La présente invention vise aussi à protéger un procédé d'obtention d'une couche mince de substance lubrifiante sur l'élément fileté mâle ou femelle pour joint fileté tubulaire résistant au grippage précédemment décrit, élément fileté qui comprend un filetage respectivement mâle ou femelle.

Le procédé selon l'invention comprend les étapes suivantes :
a) préparation d'un mélange liquide homogène entre :
   - un solvant volatil,
   - un épaississant,
   - au moins un additif extrême pression, le ou les additifs extrême pression étant compatibles physiquement et chimiquement avec l'épaississant et comprenant au moins un additif extrême pression à action chimique apte à un usage à des pressions de Hertz supérieures ou égales à 1000 MPa et
   - une huile ;
b) application au moins sur la surface des filets du filetage de l'élément fileté d'une couche mince d'épaisseur sensiblement uniforme dudit mélange liquide et ;
c) évaporation naturelle ou forcée du solvant.

Par solvant volatil, on entend toute coupe pétrolière dont les températures de distillation sont comprises entre 40° C et 250° C. On peut citer parmi ces solvants volatils les essences spéciales, les white-spirit, les pétroles lampants, les produits aromatiques tel que benzène, toluène, xylène, etc.

Optionnellement, au moins la surface des filets du filetage de l'élément fileté est traitée pour adsorber ou absorber la surface lubrifiante à appliquer.

Préférentiellement, la viscosité du mélange liquide mesurée par coupe FORD n°4 correspond à un temps compris entre 10 s et 30 s et préférentiellement entre 15 s et 25 s.

Préférentiellement aussi, la couche de mélange liquide est appliquée par pulvérisation.

Elle peut alternativement être appliquée par tout autre moyen : trempé, pinceau, aspersion.

L'évaporation du solvant peut être réalisée naturellement ou de manière forcée, notamment par chauffage modéré de l'élément fileté ou par convection d'air chaud.

Les figures suivantes illustrent de manière non limitative plusieurs modes de réalisation de l'invention.
La figure 1 représente un type d'assemblage fileté manchonné comportant 4 éléments filetés tubulaires susceptibles de mettre en oeuvre l'invention.
La figure 2 représente un autre type d'assemblage fileté manchonné comportant 4 éléments filetés tubulaires susceptibles de mettre en oeuvre l'invention.
La figure 3 représente un type d'assemblage fileté dit intégral comportant 2 éléments filetés tubulaires susceptibles de mettre en oeuvre l'invention.
La figure 4 représente quelques filets mâles d'un élément fileté tubulaire mâle du commerce du type représenté à la figure 1.
La figure 5 représente quelques filets femelles d'un élément fileté tubulaire femelle selon l'invention du type représenté à la figure 1.
La figure 6 représente un détail de la figure 5.
La figure 7 représente la phase d'engagement au début de l'assemblage des filets mâles et femelles des figures 4 et 5.
La figure 8 représente les mêmes filets mâles et femelles des figures 4 et 5 une fois l'assemblage terminé.
La figure 9 représente quelques filets mâles d'un élément fileté tubulaire mâle pour un joint fileté tubulaire suivant l'invention du type représenté à la figure 2.
La figure 10 représente quelques filets femelles d'un élément fileté tubulaire femelle selon l'invention du type représenté à la figure 2.
La figure 11 représente la phase d'engagement au début de l'assemblage des filets mâles et femelles des figures 9 et 10.
La figure 12 représente un détail de la figure 11.
La figure 13 représente les mêmes filets mâles et femelles des figures 9 et 10 une fois l'assemblage terminé.
La figure 14 représente une variante de la figure 9.
La figure 15 représente les filets mâles et femelles des figures 14 et 10 une fois l'assemblage terminé.
La figure 16 représente une zone d'extrémité libre d'un élément mâle représenté à la figure 2.
La figure 17 représente une zone de logement à l'intérieur d'un élément fileté tubulaire femelle selon l'invention représenté à la figure 2.
La figure 18 représente ces zones d'extrémité libre de la figure 16 et de logement de

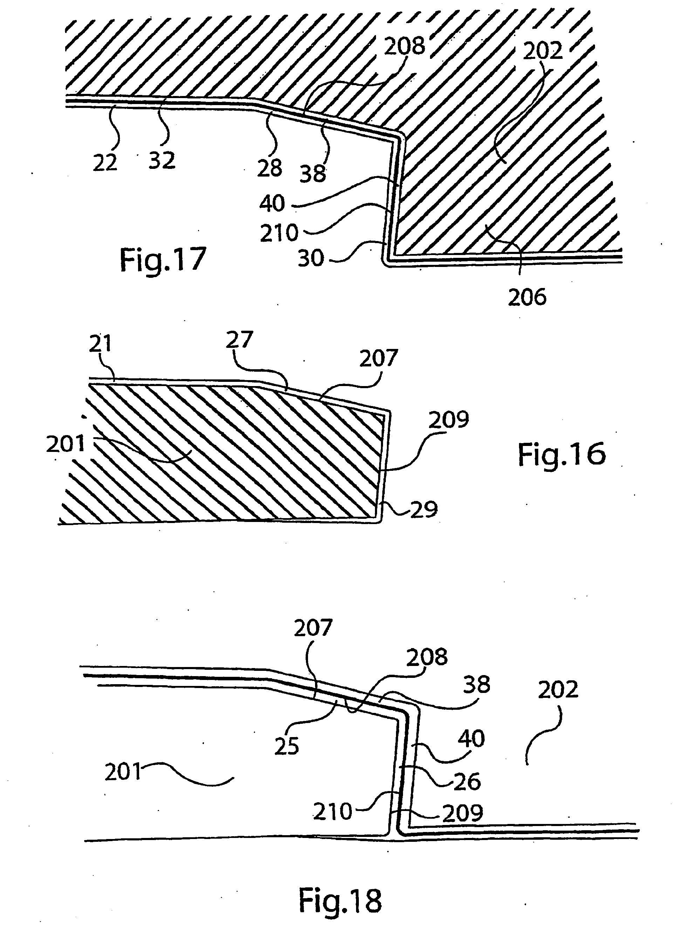

la figure 17 après assemblage des éléments filetés.

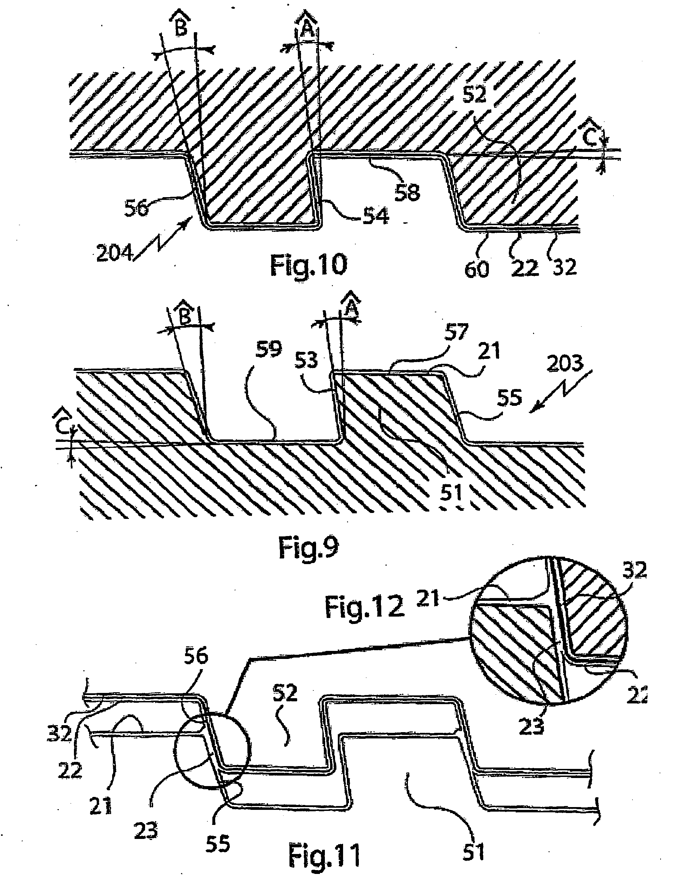

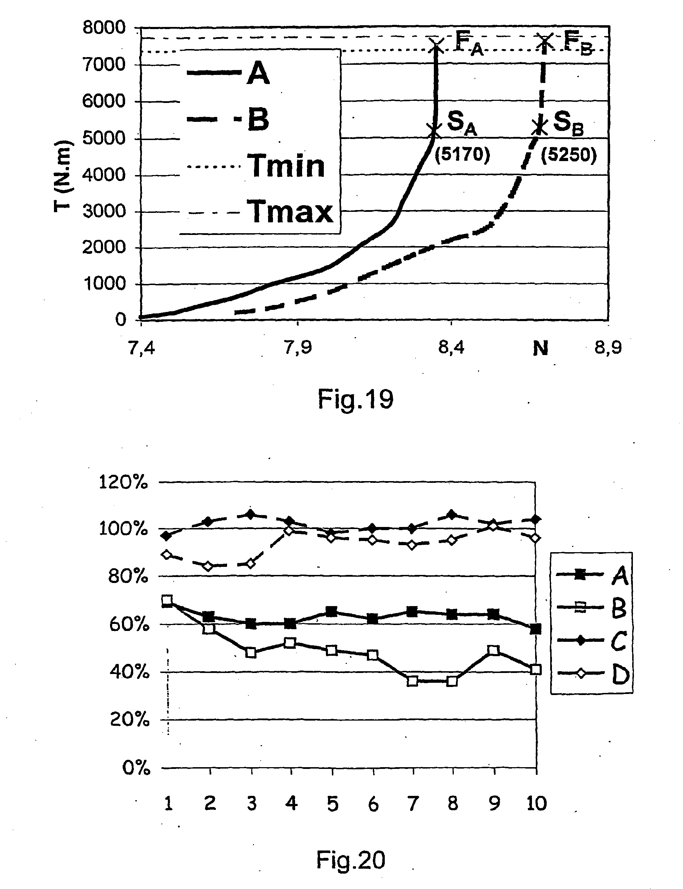

La figure 19 est un graphique représentant une courbe de vissage d'un joint fileté selon figures 9 à 13 et 16 à 18.
La figure 20 est un graphique représentant pour un joint fileté selon figures 9 à 13 et 16 à 18 l'évolution relative du couple d'accostage au vissage et celle du couple initial de dévissage en fonction du nombre de cycles de vissage-dévissage.

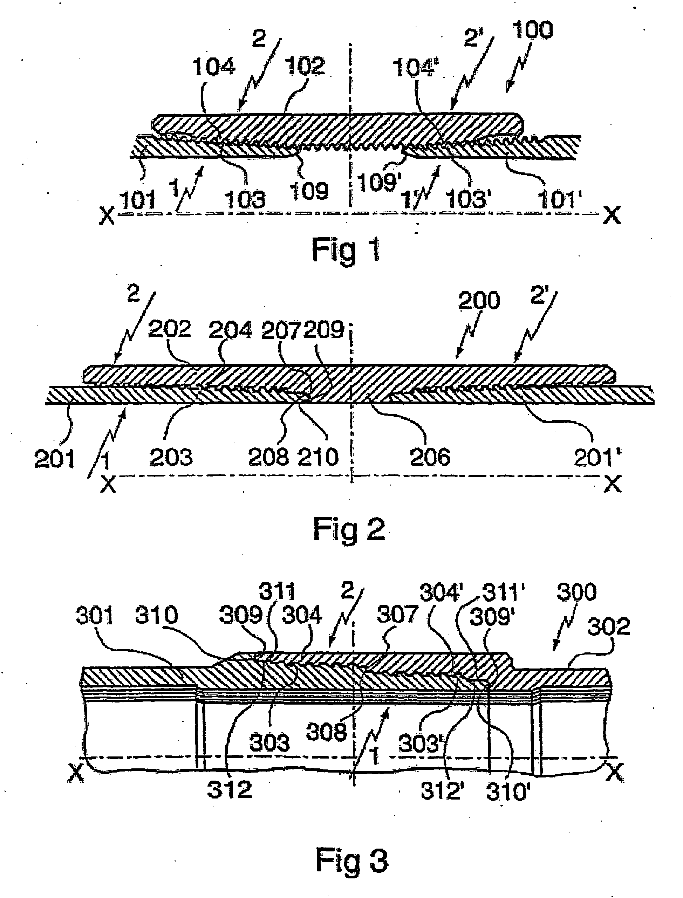

La figure 1 représente un assemblage fileté 100 selon la spécification API 5CT entre deux tubes métalliques 101 et 101' au moyen d'un manchon 102 et comportant 2 joints filetés.

Chaque extrémité de tube 101, 101' comporte un élément mâle 1, 1' comprenant un filetage conique mâle 103, 103' à filets "ronds" et se termine par une surface d'extrémité mâle 109, 109'.

Le manchon 102 comporte 2 éléments femelles 2, 2' disposés symétriquement par rapport au plan médian du manchon, chaque élément femelle comprenant un filetage conique femelle 104, 104' à filets conjugués du mâle.

Les filetages mâles 103, 103' sont vissés dans les filetages femelles conjugués 104, 104'.

La spécification API 5B définit pour ce type d'assemblage, la forme des filets, leur dimension, la conicité des filetages, le pas des filetages, etc, ...

Bien que non représenté, on peut aussi utiliser selon les spécifications API 5CT et 5B un assemblage à filetages dits "Buttress", disposé de la même manière que celui de la figure 1 mais à filets trapézoïdaux.

La figure 2 représente un assemblage fileté manchonné 200 à deux éléments mâles 1, 1' et deux éléments femelles 2, 2', à filetages coniques 203, 204 et à filets trapézoïdaux, le manchon 202 présentant un talon 206 dans sa partie centrale entre les éléments femelles, talon permettant de rendre l'écoulement de fluide non turbulent dans les tubes 201, 201' et de réaliser des butées femelles 210 venant en appui contre des butées mâles 209 constituées par les surfaces annulaires d'extrémités des tubes.

Des portées d'étanchéité mâles 207 et femelles 208 coniques, disposées sur des parties non filetées et interférant radialement de manière à former une pression élastique de contact entre elles permettent d'assurer de manière connue l'étanchéité de l'assemblage de la figure 2.

La figure 3 représente un joint fileté intégral 300 entre deux tubes 301 et 302 comportant des filetages cylindriques à double étage.

Le tube 301 comporte à son extrémité un élément mâle 1 comprenant un filetage mâle cylindrique à deux étages 303, 303', une surface mâle conique d'épaulement 307 en demi-queue d'aronde entre les deux étages de filets mâles et des butées 309, 309' à chaque extrémité de l'élément mâle.

Le tube 302 comporte à son extrémité un élément femelle 2 conjugué de l'élément mâle 1 et comprenant un filetage femelle cylindrique à deux étages 304, 304', une surface femelle conique d'épaulement 308 en demi-queue d'aronde entre les 2 étages de filets femelles et des butées 310, 310' à chaque extrémité de l'élément femelle.

Les filetages mâle et femelle de l'assemblage 300 sont à filets trapézoïdaux et ne présentent normalement pas d'interférence radiale après vissage.

Dans l'état assemblé, les épaulements 307, 308 forment la butée principale, les butées 309, 309', 310, 310' ne servant que de butée de secours en cas d'enfoncement de la butée principale.

Les surfaces coniques 311', 312' respectivement sur les éléments mâle et femelle forment au voisinage de l'extrémité de l'élément mâle une paire intérieure de portées d'étanchéité métal-métal. Les surfaces coniques 311, 312 forment, elles, au voisinage de l'extrémité de l'élément femelle une paire extérieure de portées d'étanchéité métal-métal. La paire extérieure 311, 312 de portées d'étanchéité pourrait également être disposée entre les épaulements 307, 308 et l'étage de filetage de grand diamètre 303, 304.

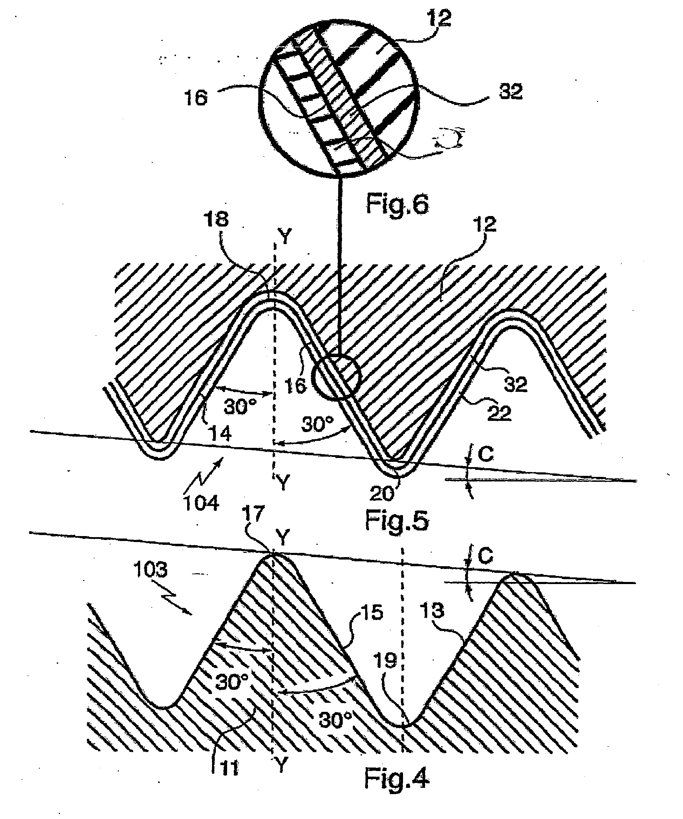

La figure 4 représente en coupe longitudinale quelques filets triangulaires 11 du filetage conique mâle 103 de la figure 1.

Les filets mâles 11 comprennent deux flancs rectilignes 13,15 qui font chacun un angle de 30° par rapport à la normale YY à l'axe XX de l'élément fileté, et de part et d'autre de cette normale, un sommet de filet mâle 17 arrondi et un fond de filet mâle 19 également arrondi.

Le flanc 15 dont la normale à la surface est dirigée vers l'extrémité libre mâle 109 est le flanc dit d'engagement car c'est le flanc d'engagement mâle qui repose sur le flanc d'engagement femelle lors de l'engagement des éléments filetés mâle et femelle en vue de leur assemblage par vissage.

Le flanc 13 dont la normale à la surface est dirigée du côté opposé à l'extrémité libre mâle 109 est le flanc porteur. Ce sont les flancs porteurs qui supportent les efforts de traction axiale sur les joints filetés. Les surfaces 13, 15 et les zones 17, 19 des filets mâles sont brutes d'usinage.

La figure 5 représente en coupe longitudinale quelques filets triangulaires 12 du filetage conique femelle 104 de la figure 1.

Les filets femelles 12 ont une forme correspondant à la forme des filets mâles 11 avec chacun un flanc d'engagement 16 et un flanc porteur 14, disposés à 30° de part et d'autre de la normale YY à l'axe de l'élément fileté, un sommet de filet femelle 20 et un fond de filet femelle 18.

Les surfaces 14, 16 et les zones 18, 20 des filets femelles sont traitées pour absorber ou adsorber une substance lubrifiante et comprennent pour cela une couche 32 de conversion par phosphatation au manganèse d'épaisseur 0,006 mm réalisée sur les surfaces de filet brutes d'usinage. La couche de phosphatation au manganèse est bien adaptée au traitement d'éléments filetés en acier non allié ou faiblement allié.

D'autres couches de phosphatation sont également possibles telle que, par exemple, une couche de phosphatation au zinc.

Dans le cas d'éléments filetés en acier à forte teneur en chrome ou en alliage à base de nickel, il peut être judicieux de plutôt réaliser une couche par oxalatation ou un dépôt de cuivre métallique.

L'épaisseur recherchée pour ces différentes couches est du même ordre de grandeur que celle par phosphatation au manganèse.

La surface traitée des filets femelles 12 est recouverte d'une couche mince 22 d'une substance lubrifiante qui est en partie adsorbée ou absorbée dans la couche de phosphatation et qui surmonte celle-ci sur quelques microns d'épaisseur de manière sensiblement uniforme sur la surface traitée des filets 12. Le rapport entre poids de couche adsorbée ou absorbée dans la couche de phosphatation et poids de couche surmontant la couche de phosphatation est d'environ 1/1.

Les compositions suivantes donnent des exemples de composition (en % en poids) et de poids de couche (en g/m²) de substance lubrifiante convenable.

### EXEMPLE 1

- Cire paraffinique pétrolière : 19 %
- Produit soufré : 6 %
- Sulfonates surbasés : 13 %
- Dithiophosphate métallique : 3 %
- huile minérale : 59 %
Poids de dépôt : 2 0 g/m²

La substance lubrifiante comprend trois additifs EP chimiques, à savoir le produit soufré, les sulfonates surbasés et le dithiophosphate métallique qui sont des constituants solubles dans l'huile. La cire est également soluble dans l'huile.

### EXEMPLE 2

- Cire de petrolatum oxydé : 29 %
- Produit soufré : 6 %
- Sulfonates de calcium surbasés : 13 %
- Dithiophosphate métallique (Zn) : 3 %
- huile minérale 49 %
Poids de dépôt : 20 g/m²
Viscosité cinématique du dépôt à +100 °C : 260 cSt.

A noter que les cires de petrolatum oxydé sont des composés très stables en température, non détériorés chimiquement par un maintien à une température de 160° C. Une telle stabilité chimique permet de descendre les joints filetés au fonds de puits où la température peut atteindre 160°C sans altération irréversible des caractéristiques de la cire ; les joints filetés peuvent alors être remontés du puits pour être dévissés avant d'être de nouveau revissés et redescendus dans le même puits ou dans un autre puits.

### EXEMPLE 3

- Cire de petrolatum : 31 %
- Produit soufré : 6 %
- Sulfonates surbasés : 13 %
- Dithiophosphate métallique : 3 %
- huile minérale 47 %
Poids de dépôt : 24 g/m²

### EXEMPLE 4

- Résine pétrolière tackifiante : 30 %
- Produit soufré : 6 %
- Sulfonates surbasés : 13 %
- Dithiophosphate métallique : 3 %
- huile minérale 48 %
Poids de dépôt : 21 g/m²

### EXEMPLE 5

- Cire sulfonatée : 30 %
- Produit soufré : 6 %
- Sulfonates surbasés : 13 %
- Dithiophosphate métallique : 3 %
- huile minérale 48 %
Poids de dépôt : 21 g/m²

### EXEMPLE 6

- Bitume : 30 %
- Produit soufré : 6 %
- Sulfonates surbasés : 13 %
- Dithiophosphate métallique : 3 %
- huile minérale 48 %
Poids de dépôt: 22 g/m²

### EXEMPLE 7

- Stéarate d'aluminium : 30 %
- Produit soufré : 6 %
- Sulfonates surbasés : 13 %
- Dithiophosphate métallique : 3 %
- huile minérale 48 %
Poids de dépôt : 23 g/m²

### EXEMPLE 8

- Bentone lipophile : 9 %
- Produit soufré : 7 %
- Sulfonates surbasés : 13 %
- Dithiophosphate métallique : 3 %
- huile minérale 68 %
Poids de dépôt : 14 g/m²

### EXEMPLE 9

- Polyalkylméthacrylate (épaississant organique) : 12 %
- Produit soufré : 6 %
- Sutfonates surbasés : 12 %
- Dithiophosphate métallique : 4 %
- huile minérale 66 %
Poids de dépôt : 23 g/m²

### EXEMPLE 10

- Cire de petrolatum oxydé : 39 %
- Polyisobutène : 2 %
- Paraffine chlorée : 59 %
Poids de dépôt : 21 g/m²

Dans cet exemple 10, la paraffine chlorée possède une consistance huileuse ; une faible proportion d'huile est ajoutée sous forme de polyisobutène (base synthétique).

L'utilisation de paraffine chlorée comme additif EP chimique rend cette composition plus particulièrement adaptée à être mise en oeuvre sur des éléments filetés en certains aciers inoxydables (ceux non sensibles à la corrosion par le chlore ou les chlorures) ou en alliage de nickel.

### EXEMPLE 11

- Cire de petrolatum oxydé : 67 %
- Produit soufré : 5 %
- Sulfonates de calcium surbasés : 12 %
- Dithiophosphate métallique (Zn) : 5 %
- huile minérale 11 %
Poids de dépôt : 23 g/m²
Viscosité cinématique du dépôt à +100 °C : 560 cSt.

Dans tous les exemples précédents, les dépôts de substance lubrifiante obtenus sont lisses du fait du caractère filmogène de la substance lubrifiante et du mélange liquide dont elle provient.

Dans tous les exemples précédents sauf pour les exemples 5 et 9, les dépôts de substance lubrifiante obtenus sont d'aspect cireux, adhérent, ne coulant pas et possèdent donc à température ambiante une consistance pâteuse ; à titre indicatif la viscosité de tels dépôts est comprise entre 100 cSt et 1000 cSt à +100°C, température susceptible d'être obtenue lors du vissage des éléments filetés.

Dans le cas des exemples 5 et 9, l'aspect du dépôt est plutôt celui d'un vernis très visqueux et sa consistance est dite semi-solide.

Dans tous les exemples sauf l'exemple 10, la substance lubrifiante comprend comme additif EP trois additifs EP chimiques, la teneur totale en additif EP variant autour de 20-25 %.

Dans les exemples 1 à 9, le rapport entre produit soufré, sulfonates surbasés et dithiophosphate métallique est sensiblement de 2:4:1. Dans l'exemple 11, il est sensiblement de 1 :2 :1.

La teneur en huile dans la substance lubrifiante varie fortement suivant la nature de l'épaississant et/ou des additifs EP et suivant la consistance souhaitée :
- autour de 50 % pour les exemples 1 à 7 ;
- autour de 65-70 % pour les exemples 8 (épaississant = bentone lipophile) et 9 (consistance plus coulante) ;
- autour de 10 % pour l'exemple 11 (consistance cireuse relativement solide) ;
- autour de 2 % seulement pour l'exemple 10 compte tenu de la consistance huileuse de la proportion de la paraffine chlorée.

Dans tous les exemples comprenant un épaississant organique, c'est-à-dire dans tous les exemples sauf dans l'exemple 8, l'épaississant présente des molécules chimiques à caractère polaire marqué qui lui confèrent un caractère adhérent à la surface métallique traitée des filets et un caractère hydrophobe. Un tel caractère adhérant hydrophobe permet à la couche mince 22 de substance lubrifiante de parfaitement recouvrir la surface traitée des filets et de protéger cette surface contre la corrosion, notamment lors du stockage des tubes avec leurs éléments filetés avant leur utilisation.

Toutes les compositions de ces 11 exemples donnent une charge de soudure à l'essai ASTM D2596 "4 billes" (essai EP) supérieure à 800 kg et un diamètre d'empreinte d'usure de bille de 0,35 à 0,37 mm après 1 h sous 392 N (40kgf) de charge lors d'essais d'usure selon ASTM D2266.

Tous les additifs EP chimiques des 11 exemples sont compatibles physiquement et chimiquement avec les épaississants correspondants. Les additifs EP chimiques doivent, en effet, rester stables jusqu'à ce qu'ils soient soumis à des températures résultant de la rupture locale du film lubrifiant et permettant à ces additifs de seulement alors réagir chimiquement avec les surfaces métalliques en contact pour former des constituants empêchant ou retardant le grippage même lorsque la pression de contact dépasse 1000 MPa.

Optionnellement, la substance lubrifiante peut comporter outre un épaississant, des additifs EP et une huile, moins de 5 % d'un colorant n'ayant pas d'action sur les propriétés antigrippantes mais destiné à témoigner de la présence de la couche mince de substance lubrifiante selon l'invention (fonction de traçabilité et de différenciation par rapport aux graisses standards API).

La substance lubrifiante peut ainsi comporter 2,5 % de noir de carbone en poudre pour conférer à la substance lubrifiante une teinte noire très homogène ou bien 0,12 % de fluorescéine (« Fluorescent Green Light ») pour conférer à la substance lubrifiante une teinte vert foncé.

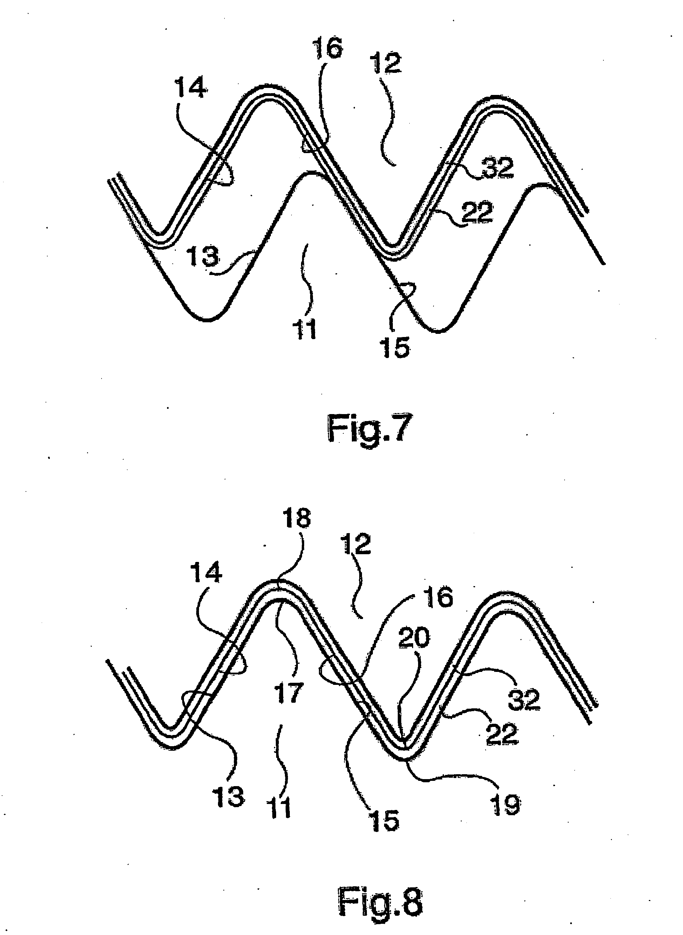

La figure 7 représente les filets femelles 12 au cours de la phase d'engagement lors de leur assemblage par vissage aux filets mâles 11.

La couche de substance lubrifiante 22 empêche le contact direct des flancs d'engagement mâles 15 bruts d'usinage et femelles 16 traités par phosphatation.

Du fait que le vissage ne vient que de commencer et de la disposition conique des filetages, il subsiste par contre un espace libre entre la couche 22 et la surface de filet mâle au niveau des flancs porteurs 13, 14 et des sommets et fonds de filets.

La couche 22 supporte au niveau des flancs d'engagement le poids du tube 101 qui est vissé en position verticale au-dessus du manchon 102 préassemblé au tube 101' et le couple élevé fourni par la clé de vissage.

Un désalignement, même léger, des axes des éléments filetés mâle et femelle 1, 2 en cours d'engagement conduirait, en l'absence de toute couche lubrifiante, à un labourage des surfaces des flancs d'engagement et à un grippage très rapide de ces flancs en contact : il peut alors être impossible de dévisser des joints filetés ainsi grippés et il faut de toutes façons reconditionner les surfaces détériorées de filet.

La présence d'épaississant et d'huile dans la substance lubrifiante de la couche 22 et la viscosité de la substance lubrifiante permettent d'assurer en présence de contraintes de cisaillement un régime de lubrification auto-alimenté typique d'une huile ou d'une graisse. Ceci se traduit par l'absence de fissuration de la substance lubrifiante au cisaillement pour des températures extérieures de mise en oeuvre comprises entre -50 et +50°C ; on peut encore dire que la substance lubrifiante s'auto-guérit ou s'auto-cicatrise au fur et à mesure qu'elle est cisaillée.

La couche de phosphatation 32 sur la surface des filets femelles 12 permet de retenir efficacement la substance lubrifiante sur la surface de ces filets.

Dans des conditions d'extrême pression où l'auto-alimentation en substance lubrifiante viendrait localement à être rompue, l'additif extrême pression chimique prend le relais pour empêcher le grippage.

La figure 8 montre les filets mâles et femelles 11, 12 en position finale vissée.

La substance lubrifiante de la couche mince 22 s'est répartie au cours du vissage dans les jeux entre les surfaces hélicoïdales des filets. Elle s'interpose entre flancs porteurs 13, 14 et entre flancs d'engagement 15, 16 et elle comble plus ou moins les jeux entre sommets et fonds de filets 17, 18, 19, 20 selon les appariements dus aux tolérances dimensionnelles.

Il n'y a pas de ce fait d'éjection d'excès de substance lubrifiante dans l'intérieur du puits et les éléments filetés ne peuvent être déformés par les pressions exercées par un fort excès de substance lubrifiante.

Le dévissage des filets assemblés conduit à une séparation en deux de la couche 22, séparation qui se produit de manière aléatoire au sein de cette couche.

Les restes de couches sur les filets mâles et femelles permettent néanmoins d'effectuer au moins 10 cycles de vissage-dévissage sans apparition de grippage.

Les inventeurs ont par contre constaté qu'un simple apport d'une graisse classique de type API 5A2 diminué par rapport aux quantités prescrites de manière standard de manière à simplement combler les jeux entre filets conduit rapidement au grippage après quelques cycles de vissage/dévissage si l'apport n'est pas renouvelé entre cycles.

La figure 9 représente en coupe longitudinale quelques filets mâles trapézoïdaux 51 du filetage conique mâle 203 de la figure 2.

Les filets mâles 51 comprennent quatre faces rectilignes à savoir :
- un flanc porteur 53 ;
- un flanc d'engagement 55 ;
- un sommet de filet 57 ;
- un fond de filet 59.

Les sommets et fonds de filets sont parallèles au cône primitif du filetage 103.

En variante non représentée, ils pourraient être parallèles à l'axe de l'assemblage, la hauteur radiale du flanc d'engagement étant alors plus grande que celle du flanc porteur.

Le flanc porteur 53 fait un angle A faiblement négatif avec la normale à l'axe de l'élément fileté, par exemple -3°, de sorte qu'il est en léger surplomb.

Le flanc d'engagement 55 fait un angle positif B avec la normale à l'axe de l'assemblage de sorte que les filets 51 soient plus étroits à leur base qu'à leur sommet 57, ce qui facilite l'usinage.

Les 4 faces 53, 55, 57, 59 des filets 51 sont recouvertes à l'état brut d'usinage d'un dépôt 21 de quelques micromètres d'épaisseur de la même substance lubrifiante que celle objet du dépôt 22 de la figure 5. On peut appliquer les mêmes compositions et les mêmes poids de couche que dans le cas des exemples relatifs à la figure 5.

La figure 10 représente en coupe longitudinale quelques filets femelles trapézoïdaux 52 du filetage conique femelle 204 de la figure 2.

Les filets femelles 52 comprennent 4 faces rectilignes de forme et disposition correspondant à celles de filets mâles 51, à savoir :
- un flanc porteur 54 d'angle A faiblement négatif ;
- un flanc d'engagement 56 d'angle positif B ;
- un sommet de filet 60 ;
- un fond de filet 58.

Les faces 54, 56, 58, 60 sont traitées par phosphatation au manganèse de manière à réaliser une couche de phosphatation 32 d'épaisseur 0,006 mm comme dans le cas de la figure 5.

La surface ainsi traitée des filets femelles 52 est recouverte d'une couche mince 22 de la même substance lubrifiante que celle décrite à la figure 5.

Cette substance lubrifiante est absorbée ou adsorbée sur la surface traitée des filets 52 et surmonte cette surface sur quelques micromètres d'épaisseur de manière uniforme. On peut appliquer les mêmes compositions et les mêmes poids de couche que dans le cas des exemples relatifs à la figure 5.

Comme dans le cas de la figure 5, la phosphatation au manganèse peut être remplacée par un autre traitement de surface plus adapté au métal de l'élément fileté pour réaliser des surfaces propres à absorber ou adsorber la substance lubrifiante.

La figure 11 représente les filets femelles 52 au cours de la phase d'engagement lors de leur assemblage par vissage aux filets mâles 51.

Au niveau des flancs d'engagement 55, 56 (voir figure 12), les couches 21, 22 ne font plus qu'une, 23, alors qu'elles sont distinctes entre les autres faces qui ne sont pas en contact lors de la phase d'engagement.

La couche 23 supporte le poids du tube 201 à assembler, le couple de vissage et éventuellement des efforts parasites si l'axe de l'élément mâle fait un angle avec l'axe de l'élément femelle.

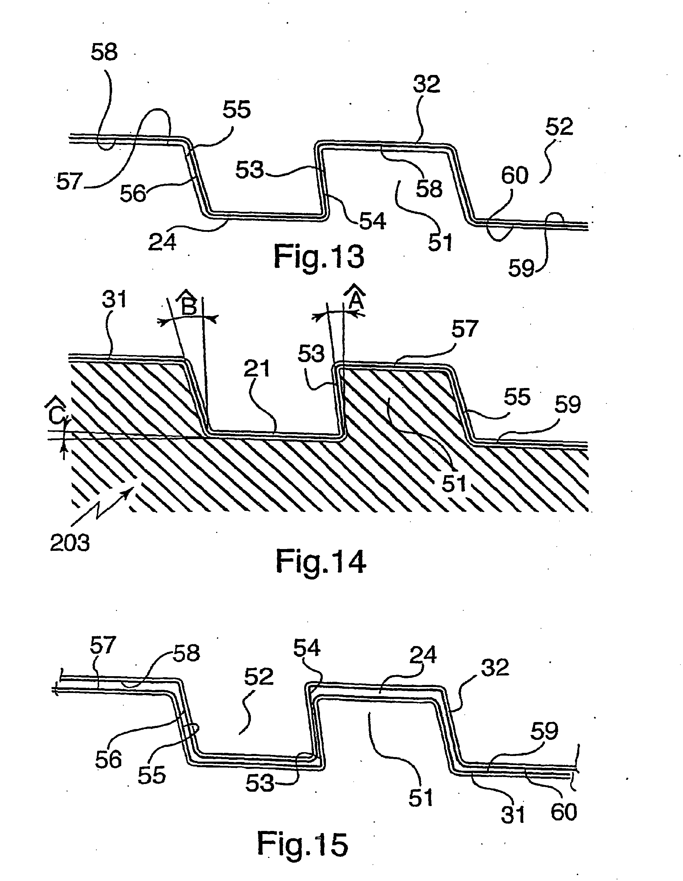

En fin de vissage (figure 13), la substance lubrifiante remplit substantiellement tous les jeux entre les filets 51, 52 et empêche le contact direct entre flancs porteurs 53, 54 sous traction et entre sommet de filet femelle 60 et fond de filet mâle 59 qui interfèrent radialement.

La figure 14 montre une variante de la figure 9 dans laquelle la couche 21 de substance lubrifiante n'est pas réalisée directement sur la surface brute d'usinage des filets mâles mais sur une couche de phosphatation 31 déposée au préalable et semblable en nature et en épaisseur à celle 32 en surface des filets femelles 52 de la figure 10.

Une telle configuration permet de mieux retenir la substance lubrifiante sur la surface des filets mâles et d'obtenir avec les filets femelles correspondants de la figure 10 un assemblage illustré par la figure 14, particulièrement apte à subir de nombreux cycles de vissage-dévissage sans risque de grippage.

Un tel joint fileté selon figure 15 nécessite par contre de réaliser une phosphatation à la fois sur manchon 202 et sur tubes 101, 101' et est donc plus coûteux que le joint de la figure 13.

La figure 16 représente la zone d'extrémité libre du tube 201 et par conséquent de l'élément fileté mâle de la figure 2.

Selon la figure 16, la couche 21 de la substance lubrifiante recouvre non seulement la surface des filets mâles 51 de la figure 9 mais également toute la surface périphérique extérieure de l'élément mâle au-delà du filetage, et plus spécialement en 27 la surface de portée d'étanchéité mâle 207 ainsi qu'en 29 la surface de butée mâle 209 d'extrémité de tube. Le poids de couche déposé sur les surfaces 207, 209 est sensiblement voisin de celui déposé à la surface des filets mâles.

La figure 17 représente la zone de logement femelle pour l'extrémité mâle du manchon 202 de la figure 2.

Selon la figure 17, la surface intérieure de l'élément femelle entre filetage 204 et talon 206, est traitée comme la surface des filets femelles 52 de la figure 10 par phosphatation au manganèse (couche 32) et est recouverte comme la surface de ces filets 52 par la couche 22 de la substance lubrifiante.

Les couches 32 et 22 recouvrent plus spécialement en 38 et 28 la surface de portée femelle 208 et en 40 et 30 la butée femelle 210.

Ces couches peuvent, sans inconvénient, s'étendre sur la surface périphérique intérieure du talon 206 et sur la surface périphérique extérieure du manchon 202.

L'épaisseur de la couche de phosphatation est sensiblement identique au niveau de la portée d'étanchéité 208, de la butée femelle 210 et des filets femelles 52.

De même, le poids de couche de substance lubrifiante est sensiblement identique au niveau de la portée d'étanchéité 208, de la butée femelle 210 et des filets femelles 52.

La figure 18 représente l'assemblage en position vissée de l'extrémité libre mâle de la figure 16 avec la zone correspondante femelle de la figure 17.

Au cours du vissage, les couches de substances lubrifiantes 27, 28 entrent en contact l'une de l'autre.

En poursuivant le vissage, ces couches retenues par la couche de phosphatation 38 empêchent le contact direct des surfaces métalliques des portées d'étanchéité et leur grippage surtout lorsque les surfaces 207, 208 sont peu inclinées et lorsque le contact de ces surfaces jusqu'en position finale d'assemblage se produit sur une grande longueur.

Le mécanisme d'action de la substance lubrifiante est le même que celui au niveau des surfaces de filets.

Tout à fait en fin de vissage, les couches 29, 30 au niveau des surfaces de butée 209, 210 entrent en contact et empêchent le grippage de ces surfaces toujours par le même mécanisme.

La couche de phosphatation 40 a de même pour rôle de retenir au maximum le film de substance lubrifiante. Bien que non représenté, on peut aussi imaginer que la couche lubrifiante en 27 et 29 (portée et butée mâles) soit déposée non pas directement sur une surface métallique brute d'usinage mais sur des surfaces traitées par phosphatation comme dans le cas de la figure 17.

On peut aussi sans difficulté aucune appliquer l'enseignement exposé dans les figures 4 à 18 à des filetages cylindriques à un ou plusieurs étages tel que ceux 303, 303', 304, 304' du joint fileté intégral de la figure 3 ainsi qu'aux surfaces de butée et de portée d'étanchéité existant sur ce point.

D'autres modes de réalisation non décrits sont également couverts par la présente invention, notamment le cas où la couche de phosphatation est réalisée à la surface des filets de l'élément fileté mâle et non pas de l'élément fileté femelle (configuration opposée à celles des figures 1-18).

L'invention peut notamment s'appliquer à tout élément fileté, mâle ou femelle, quelle que soit la disposition du filetage ou des parties filetées, à toute forme de filet, à toute largeur de filet, constante ou variable sur la longueur du filetage, à des filets interférents ou non interférents, avec ou non contact ou frettage sur les deux flancs d'un même filet, que le joint fileté obtenu soit du type manchonné ou intégral. Elle peut aussi s'appliquer quels que soient le nombre, la forme et la disposition des surfaces de portée et de butée.

Nous allons maintenant décrire de manière non limitative différents exemples de procédé de dépôt de substance lubrifiante en couche mince à la surface de filets, de portées d'étanchéité et/ou de butées pour obtenir les joints résistant au grippage précédemment décrits.

On prépare un mélange liquide dont la viscosité est mesurée par coupe FORD n°4 à 25 °C et dont on donne ci-après plusieurs exemples non limitatifs de formulation. Les numéros de ces exemples de formulation de mélange liquide correspondent respectivement aux mêmes numéros des exemples précédents de composition de substance lubrifiante, la substance lubrifiante correspondant à l'« extrait sec » du mélange liquide du même numéro d'exemple.

### EXEMPLE 1

- Solvant spécial hydrocarboné : 20 %
- Huile minérale : 47 %
- Cire paraffinique pétrolière : 15 %
- Produit soufré : 5 %
- Sulfonates surbasés : 10 %
- Dithiophosphate métallique : 3 %
Viscosité selon coupe FORD n°4 : 20 s

### EXEMPLE 2

- Solvant spécial hydrocarboné (white spirit) : 23 %
- Huile minérale : 37 %
- Cire de petrolatum oxydé : 22 %
- Produit soufré : 5 %
- Sulfonates surbasés : 10 %
- Dithiophosphate métallique : 3 %
Viscosité selon coupe FORD n°4 : 20 s

### EXEMPLE 3

- Solvant spécial hydrocarboné : 20 %
- Huile minérale : 37 %
- Cire de petrolatum : 25 %
- Produit soufré : 5 %
- Sulfonates surbasés : 10 %
- Dithiophosphate métallique : 3 %
Viscosité selon coupe FORD n°4 : 21 s

### EXEMPLE 4

- Solvant spécial hydrocarboné : 22 %
- Huile minérale : 37 %
- Résine pétrolière tackifiante : 23 %
- Produit soufré : 5 %
- Sulfonates surbasés : 10 %
- Dithiophosphate métallique : 3 %
Viscosité selon coupe FORD n°4 : 18 s

### EXEMPLE 5

- Solvant spécial hydrocarboné : 22 %
- Huile minérale : 37 %
- Cire sulfonatée : 23 %
- Produit soufré : 5 %
- Sulfonates surbasés : 10 %
- Dithiophosphate métallique : 3 %
Viscosité selon coupe FORD n°4 : 16 s

### EXEMPLE 6

- Solvant spécial hydrocarboné : 22 %
- Huile minérale : 37 %
- Bitume : 23 %
- Produit soufré : 5 %
- Sulfonates surbasés : 10 %
- Dithiophosphate métallique : 3 %
Viscosité selon coupe FORD n°4 : 17 s

### EXEMPLE 7

- Solvant spécial hydrocarboné : 20 %
- Huile minérale : 39 %
- Stéréate d'aluminium : 23 %
- Produit soufré : 5 %
- Sulfonates surbasés : 10 %
- Dithiophosphate métallique : 3 %
Viscosité selon coupe FORD n°4 : 18 s

### EXEMPLE 8

- Solvant spécial hydrocarboné : 20 %
- Huile minérale : 54 %
- Bentone lipophile : 8 %
- Produit soufré : 5 %
- Sulfonates surbasés : 10 %
- Dithiophosphate métallique : 3 %
Viscosité selon coupe FORD n°4 : 17 s

### EXEMPLE 9

- Solvant spécial hydrocarboné : 20 %
- Huile minérale : 52 %
- Polyalhylméthacrylate à 50 % : 10 %
- Produit soufré : 5 %
- Sulfonates surbasés : 10 %
- Dithiophosphate métallique : 3 %
Viscosité selon coupe FORD n°4 : 22 s

### EXEMPLE 10

- Solvant spécial hydrocarboné : 42 %
- Cire de petrolatum oxydé : 23 %
- Polyisobutène : 1 %
- Paraffine chlorée : 34 %
Viscosité selon coupe FORD n°4 : 20 s

### EXEMPLE 11

- Solvant spécial hydrocarboné (heptane) : 40 %
- Huile minérale : 7 %
- Cire de petrolatum oxydé : 40 %
- Produit soufré : 3 %
- Sulfonates surbasés : 7 %
- Dithiophosphate métallique : 3 %
Viscosité selon coupe FORD n°4 : 20 s

Tous ces mélanges liquides sont des dispersions intimes et stables ; ils sont de ce fait homogènes et donnent après élimination du solvant une substance lubrifiante homogène au sens qui a été défini ci-avant dans le présent texte.

Ces mélanges liquides peuvent commodément être préparés à l'avance et être stockés dans des récipients fermés en attendant d'être utilisés. Il conviendra simplement, si besoin est, d'homogénéiser le mélange avant emploi.

Le mélange doit être appliqué en couche mince d'épaisseur sensiblement uniforme sur des éléments filetés mâles et femelles selon figure 2 et plus particulièrement pour chacun des éléments filetés sur leur filetage 203, 204, sur leur portée d'étanchéité 207, 208 et sur leur butée 209, 210.

Le fait que les épaississants organiques utilisés pour les mélanges des exemples 1 à 7 et 9 à 11 possèdent des molécules chimiques à caractère polaire marqué permet au mélange liquide de mieux adhérer au substrat à recouvrir.

La teneur en solvant dans les mélanges liquides est de l'ordre de 20 % pour les exemples 1 à 9 et de l'ordre de 40 % pour les exemples 10 et 11. Elle varie notamment en fonction de la consistance de l'extrait sec obtenu après évaporation du solvant et de la nature du solvant (white spirit, heptane...).

Les éléments filetés mâles 1 qui se trouvent en extrémité des tubes 201 sont amenés bruts d'usinage sous une douche du type de celles utilisées pour phosphater les éléments filetés mâles.

La douche est alimentée sous faible pression (1 à 3 bars relatifs) par le mélange liquide et asperge de mélange liquide la surface extérieure des éléments filetés.

Compte tenu de la faible viscosité du mélange liquide, celui-ci se répartit en film d'épaisseur uniforme sur toute la périphérie du filetage 203, de la partie d'étanchéité 207 et de la butée 209.

L'épaisseur du film de mélange liquide est fonction de la viscosité du mélange qui est elle-même notamment fonction de la teneur en huile et en solvant volatil : une teneur élevée en huile et en solvant volatil abaisse la viscosité du mélange et par conséquent l'épaisseur du film liquide.

On laisse ensuite complètement évaporer le solvant de manière à obtenir une couche d'épaisseur sensiblement uniforme de substance lubrifiante.

Le temps de séchage du mélange liquide est lié à la durée d'évaporation du solvant laquelle est fonction de la nature du solvant (durée plus faible pour l'heptane que pour le white spirit par exemple) et de la température de séchage.

Les éléments filetés femelles 2 à revêtir sont situés à l'intérieur de manchons 202.

Les manchons 202 ont préalablement subi de manière connue un traitement de phosphatation au manganèse qui a recouvert le filetage 204, la portée 208 et la butée 210 de chacun des deux éléments filetés femelles d'une fine couche de conversion de phosphate d'environ 0,006 mm d'épaisseur.

Les manchons 202 sont ensuite amenés individuellement dans des enceintes de peinture qui comportent des buses de pulvérisation alimentées en mélange liquide et dirigées de manière à projeter de fines gouttelettes de mélange liquide vers le filetage, la portée et la butée de chaque élément fileté femelle.

L'épaisseur du film de mélange liquide résultant est fonction de la viscosité du mélange liquide, de la pression de pulvérisation, du diamètre des buses de pulvérisation et de la durée de la pulvérisation.

Les manchons sont ensuite retirés de l'enceinte de peinture et séchés par circulation d'air chaud jusqu'à évaporation complète du solvant.

Chaque manchon 202 est ensuite vissé en usine de manière standard par un de ses deux éléments filetés femelles sur un élément fileté mâle de l'une des deux extrémités du tube 101.

On protège ensuite de manière connue le second élément fileté femelle non vissé du manchon 202 et le second élément fileté mâle non vissé à l'autre extrémité du tube 201 par des protecteurs de manière à éviter toute pollution de ces éléments filetés par des particules abrasives lors du transport ou du stockage, susceptible de détériorer les performances d'étanchéité lors de la mise en oeuvre dans le puits de pétrole.

La substance lubrifiante appliquée possédant des vertus hydrophobes et anticorrosion permet de protéger les éléments filetés de la corrosion pendant le stockage et le transport.

Si toutefois la substance lubrifiante venait à être polluée, il est facile d'éliminer la couche de celle-ci comme s'il s'agissait d'une graisse par nettoyage haute pression à l'eau ou par solvant pétrolier, d'appliquer un nouveau film de mélange liquide, par exemple au pinceau et de laisser évaporer le solvant.

L'addition de colorant à la substance lubrifiante peut faciliter le contrôle de ces opérations d'élimination de la couche de substance lubrifiante polluée et de reconstitution de celle-ci.

Alternativement, on peut appliquer de la graisse standard type API sur l'élément fileté dévêtu ou non dévêtu ou encore partiellement dévêtu de substance lubrifiante. La substance lubrifiante est en effet totalement compatible avec la graisse type API.

De telles procédures de réparation ne sont pas possibles avec des vernis de glissement.

Nous allons maintenant présenter à la figure 19 deux courbes de vissage obtenues sur joints filetés VAM TOP® selon catalogue VAM® n° 940 édité par la demanderesse, de dimensions 5½" x 17 lb/ft (diamètre extérieur des tubes 139,7 mm et épaisseur des tubes 7,72 mm), en acier faiblement allié traité thermiquement pour un grade L80 (limite d'élasticité supérieure ou égale à 551 MPa).

La figure 19 représente en ordonnées le couple de vissage T en fonction du nombre de tours N pour deux essais A et B, les courbes A et B ayant été décalées suivant l'axe des X pour faciliter leur lecture.

La courbe A est relative à un joint selon l'invention : l'élément fileté mâle est semblable à celui de la figure 9 (filets trapézoïdaux bruts d'usinage revêtus de la substance lubrifiante de l'exemple n° 2 de composition) et l'élément fileté femelle est semblable à celui de la figure 10 (filets trapézoïdaux phosphatés au manganèse et revêtus de la même substance lubrifiante de l'exemple n° 2 de composition).

La courbe B est relative à un joint de référence lubrifié de manière standard avec de la graisse API 5A2.

Sur les deux courbes A et B, une fois l'engagement réalisé entre élément fileté femelle et mâle, le couple de vissage monte régulièrement du fait du glissement sous pression de contact des faces correspondantes des filets. Le couple de vissage augmente significativement parce que l'interférence radiale entre les filets mâles et femelles résultant des caractéristiques dimensionnelles des joints filetés testés est élevée.

On note à un moment donné une augmentation de la pente de la courbe de vissage qui traduit l'apparition d'une interférence radiale entre portées d'étanchéité 207-208. Les courbes A et B de la figure 19 sont caractéristiques de joints filetés présentant une interférence entre portées d'étanchéité élevée.

A partir du point S, le couple du vissage augmente quasi verticalement et traduit l'accostage des butées 209/210.

Le point F désigne le couple final de vissage qui est situé entre le couple de vissage minimal (Tₘᵢₙ) et le couple de vissage maximal (Tₘₐₓ) spécifiés pour ce type de joint fileté.

La courbe A obtenue sur un joint fileté selon la présente invention est très semblable à celle B obtenue sur un joint fileté lubrifié par de la graisse API tant au point de son allure que du couple à l'accostage T_{S} et du couple final T_{F}. Ceci démontre que le coefficient de frottement de la substance lubrifiante selon la présente invention est similaire à celui de la graisse API standard.

Pour les deux courbes A et B, le couple T_{S} à l'accostage est égal à environ 70 % du couple de vissage optimal spécifié pour ce type de joint fileté du fait de l'appariement particulier des éléments filetés testés (interférences élevées tant entre filetages qu'entre portées d'étanchéité).

Les courbes A et B de la figure 20 montrent pour des joints filetés VAM TOP® similaires à ceux de la figure précédente et traités de la même manière la variation du couple d'accostage en fonction du nombre de cycles de vissage-dévissage réalisé (jusqu'à 10 cycles), le couple d'accostage étant exprimé en valeur relative du couple de vissage optimal, ce dernier étant la valeur moyenne entre couple de vissage minimal et couple de vissage maximal spécifiés.

On constate sur la figure 20 que le couple d'accostage varie peu au cours de ces 10 cycles de vissage-dévissage et que la stabilité du couple d'accostage est meilleure sur un joint fileté selon l'invention (courbe A) que celle d'un joint enduit de graisse API (courbe B) même en renouvelant l'enduction entre cycles de vissage-dévissage : le couple d'accostage T_{S} varie de 69 % du couple de vissage optimal au 1^{er} vissage à 58 % au 10^{ème} vissage dans le cas de la courbe A contre 70 % au 1^{er} vissage et 36 % au 6^{ème} vissage dans le cas de la courbe B. Ceci démontre qu'il reste toujours suffisamment de substance lubrifiante sur un joint fileté selon l'invention pour obtenir des caractéristiques lubrifiantes stables tant au niveau des filets que des portées d'étanchéité après 10 cycles de vissage-dévissage.

Les courbes C et D de la figure 20 montrent, pour respectivement les mêmes joints filetés que ceux des courbes A et B de la même figure 20, la variation du couple initial de dévissage en fonction du nombre de dévissages pour 10 cycles consécutifs de vissage-dévissage, cette variation étant exprimée en valeur relative du couple final de vissage.

Le premier enseignement de la courbe C de la figure 20 (joint fileté selon l'invention) est que, du fait de l'absence de grippage, il est toujours possible de dévisser le joint.

Le couple initial de dévissage varie pour la courbe C entre 97 % et 106 % du couple final de vissage, ce qui démontre encore des performances stables.

Dans le cas de la courbe D de la figure 20 (graisse API), le couple initial de dévissage varie entre 84 % et 101 % du couple final de vissage, soit une variation un peu plus importante que dans le cas de la courbe C.

L'aspect visuel final des filets et portées d'étanchéité après ces 10 cycles de vissage-dévissage est excellent, sans aucune trace de grippage.

Le tableau suivant compare les nombres de cycles de vissage-dévissage obtenus avant apparition de grippage pour un maximum de 10 cycles réalisés sur le même type de joints filetés VAM TOP® 5"½ 17 lb/ft grade L80 que pour les essais des figures 19 et 20 mais les éléments filetés ont été choisis pour montrer une interférence entre filetages faible et une interférence entre portées élevée.

| | nombre de cycles avant grippage |
|---|---|
| Joint fileté avec graisse API 5A2 (référence) | ≥ 10 |
| Joint fileté avec vernis sec au MoS₂ | 6 |
| Joint fileté selon la présente invention avec substance lubrifiante selon exemple n° 2 | ≥ 10 |

Les résultats confirment que l'application de vernis sec au MoS₂ selon l'état de la technique conduit rapidement à un grippage inacceptable alors que celle de la substance lubrifiante définie précédemment donne des résultats satisfaisants, comparables, du point de vue résistance au grippage, aux résultats sur joints revêtus de graisse API.

## Revendications

1. Elément fileté mâle ou femelle (2) de joint fileté tubulaire pour puits d'hydrocarbures, comprenant un filetage respectivement mâle ou femelle (104, 204), une substance lubrifiante de consistance apte à assurer un régime de lubrification auto-alimenté et un caractère filmogène étant déposée au moins au niveau de la surface (14, 16, 18, 20, 54, 56, 58, 60) des filets (12, 52) du filetage et étant constituée par un mélange homogène dont les caractéristiques lubrifiantes et antigrippantes sont définies par la combinaison des 3 groupes de composés suivants :
a) un épaississant,
b) au moins un additif extrême pression, le ou les additifs extrême pression étant compatibles physiquement et chimiquement avec l'épaississant et comprenant au moins un additif extrême pression à action chimique dit additif EP chimique qui est apte à un usage à des pressions de Hertz supérieures ou égales à 1000 MPa et
c) une huile,
**caractérisé en ce que** la substance lubrifiante y est déposée en couche mince (22) d'épaisseur inférieure à 0,1 mm préalablement à tout vissage dudit élément fileté avec un élément fileté de type conjugué femelle ou mâle.

2. Elément fileté selon la revendication 1, **caractérisé en ce que** la substance lubrifiante est appliquée à l'atelier de fabrication de l'élément fileté.

3. Elément fileté selon la revendication 1 ou 2, **caractérisé en ce que** le ou les additifs EP chimiques et l'épaississant sont solubles dans l'huile.

4. Elément fileté selon l'une quelconque des revendications 1 à 3 **caractérisé en ce que** l'épaississant possède des molécules chimiques à caractère polaire marqué.

5. Elément fileté selon l'une quelconque des revendications 1 à 4 **caractérisé en ce que** l'épaississant est stable chimiquement jusqu'à une température supérieure ou égale à 120°C et de préférence supérieure ou égale à 160°C.

6. Elément fileté selon l'une quelconque des revendications 1 à 5 **caractérisé en ce que** l'épaississant est un épaississant organique.

7. Elément fileté selon l'une quelconque des revendications 1 à 5 **caractérisé en ce que** l'épaississant est un épaississant minéral.

8. Elément fileté selon l'une quelconque des revendications 1 à 7 **caractérisé en ce que** le ou les additifs EP chimiques sont choisis parmi le groupe constitué par les additifs EP chimiques à base de soufre ou contenant du soufre, ceux à base de phosphore, ceux à base de soufre et de phosphore, ceux à base de chlore et ceux à base d'esters ou d'acides gras modifiés ou non ou à base d'esters complexes.

9. Elément fileté selon l'une quelconque des revendications 1 à 8 **caractérisé en ce que** l'épaississant organique est une cire de petrolatum oxydé, **en ce que** les additifs EP chimiques sont plusieurs comprenant un produit soufré, un sulfonâte surbasé et un dithiophosphate métallique et **en ce que** l'huile est une huile minérale.

10. Elément fileté selon l'une quelconque des revendications 1 à 9 **caractérisé en ce que** le ou les additifs EP comprennent au moins un additif EP à action physique.

11. Elément fileté selon l'une quelconque des revendications 1 à 10 **caractérisé en ce que** le ou les additifs EP est ou sont tous du type à "action chimique".

12. Elément fileté selon l'une quelconque des revendications 1 à 11 **caractérisé en ce qu'**au moins un du ou des additifs EP possède des propriétés anti-corrosion.

13. Elément fileté selon l'une quelconque des revendications 1 à 12 **caractérisé en ce que** la teneur totale en additifs EP dans la substance lubrifiante est comprise entre 5 % et 50 % en poids et préférentiellement entre 15 % et 32 % en poids et **en ce que** les additifs EP comprennent plusieurs additifs EP chimiques.

14. Elément fileté selon la revendication 13 **caractérisé en ce que** la teneur en épaississant dans la substance lubrifiante est comprise entre 5 % et 60 % en poids et préférentiellement entre 8 % et 40 % en poids et **en ce que** la teneur en huile dans la substance lubrifiante est comprise entre 30 % et 75 % en poids.

15. Elément fileté selon la revendication 13 **caractérisé en ce que** la teneur en épaississant dans la substance lubrifiante est comprise entre 60 % et 80 % en poids et **en ce que** la teneur en huile dans la substance lubrifiante est comprise entre 5 % et 20 % en poids.

16. Elément fileté selon l'une quelconque des revendications 1 à 12 **caractérisé en ce que,** le ou les additifs EP chimiques comprenant une paraffine chlorée, la teneur en épaississant dans la substance lubrifiante est comprise entre 25 % et 60 % en poids, **en ce que** la teneur totale en additifs EP dans la substance lubrifiante est comprise entre 40 % et 75 % en poids et **en ce que** la teneur en huile dans la substance lubrifiante est comprise entre 0,5 % et 15 % en poids.

17. Elément fileté selon l'une quelconque des revendications 1 à 16 **caractérisé en ce que** le poids de couche de substance lubrifiante déposé est compris entre 0,1 g/m² et 40 g/m².

18. Elément fileté selon l'une quelconque des revendications 1 à 17 **caractérisé en ce que** la surface (14, 16, 18, 20, 54, 56, 58, 60) sur laquelle est déposée la substance lubrifiante est traitée pour adsorber ou absorber ladite substance lubrifiante.

19. Elément fileté selon la revendication 18, **caractérisée en ce que** ladite surface traitée est la surface d'une couche (32) choisie parmi le groupe constitué par les couches de phosphatation, les couches d'oxalatation et les couches métalliques.

20. Elément fileté selon l'une quelconque des revendications 1 à 18 **caractérisé en ce que** ladite surface traitée (14, 16, 18, 20, 54, 56, 58, 60) est traitée pour conférer à ladite surface une rugosité contrôlée de manière à adsorber ou absorber la substance lubrifiante.

21. Elément fileté selon l'une des revendications 18 à 20 **caractérisé en ce que** ladite surface traitée (14, 16, 18, 20, 54, 56, 58, 60) est traitée pour adsorber ou absorber la substance lubrifiante sur une profondeur comprise entre 0,003 mm et 0,080 mm.

22. Elément fileté selon l'une quelconque des revendications 1 à 21 **caractérisé en ce que,** l'élément fileté comprenant au moins une portée d'étanchéité (208), la substance lubrifiante est aussi déposée en couche mince (28) d'épaisseur inférieure à 0,1 mm sur chaque surface de portée d'étanchéité avant tout vissage de l'élément fileté avec un élément fileté de type conjugué.

23. Elément fileté selon l'une quelconque des revendications 1 à 22 **caractérisé en ce que**, l'élément fileté comprenant au moins une butée de vissage (210), la substance lubrifiante est aussi déposée en couche mince (30) d'épaisseur inférieure à 0,1 mm sur chaque surface de butée avant tout vissage de l'élément fileté avec un élément fileté de type conjugué.

24. Elément fileté selon la revendication 22 ou 23 **caractérisé en ce que** toutes les surfaces sur lesquelles la substance lubrifiante est déposée en couche mince sont des surfaces traitées pour adsorber ou absorber la substance lubrifiante.

25. Elément fileté selon l'une quelconque des revendications 1 à 24 **caractérisé en ce que** la substance lubrifiante comprend en outre moins de 5 % en poids de colorant inactif vis-à-vis des propriétés de résistance au grippage.

26. Elément fileté selon l'une quelconque des revendications 1 à 25 **caractérisé en ce que** la substance lubrifiante ne libère pas de substance dangereuse pour l'environnement tel que par exemple du plomb ou des métaux lourds.

27. Joint fileté tubulaire résistant au grippage et comprenant un élément fileté mâle et un élément fileté femelle, chacun de ces éléments filetés comprenant un filetage du type correspondant, ces filetages étant vissés l'un dans l'autre dans une position d'assemblage, **caractérisé en ce qu'**au moins un des deux éléments filetés est un élément fileté selon l'une quelconque des revendications 1 à 26.

28. Joint fileté tubulaire selon la revendication 27 **caractérisé en ce que** les deux éléments filetés sont des éléments filetés selon l'une des revendications 1 à 28, un seul des éléments filetés présentant une surface sur laquelle est déposée la substance lubrifiante qui ait été traitée selon l'une des revendications 18, 19, 20, 21 ou 24.

29. Procédé d'obtention d'une couche mince d'épaisseur inférieure à 0,1 mm d'une substance lubrifiante de consistance pâteuse possédant un caractère filmogène et apte à assurer un régime de lubrification auto-alimenté sur un élément fileté mâle ou femelle d'un joint fileté tubulaire pour puits d'hydrocarbures, l'élément fileté comprenant un filetage respectivement mâle ou femelle selon le type de l'élément fileté, ledit procédé comportant les phases suivantes :
a) on prépare un mélange liquide homogène entre :
- un solvant volatil,
- un épaississant,
- au moins un additif extrême pression, le ou les additifs extrême pression étant compatibles physiquement et chimiquement avec l'épaississant et comprenant au moins un additif extrême pression à action chimique qui est apte à un usage à des pressions de Hertz supérieures ou égales à 1000 MPa et
- une huile,
les teneurs en huile et solvant volatil étant choisies pour obtenir une viscosité adéquate du mélange liquide ;
b) on applique au moins sur la surface des filets du filetage avant tout vissage de l'élément fileté avec un élément fileté de type conjugué femelle ou mâle une couche mince dudit mélange liquide d'épaisseur déterminée sensiblement uniforme ;
c) on laisse ou on fait évaporer le solvant volatil,
l'épaisseur de couche de mélange liquide étant déterminée pour obtenir l'épaisseur voulue de la couche mince de substance lubrifiante après évaporation du solvant volatil.

30. Procédé selon la revendication 29, **caractérisé en ce que** l'application de mélange liquide est obtenue par une aspersion par les trous d'une douche ou par une pulvérisation sous pression, l'épaisseur de couche de mélange liquide appliquée étant fonction de la viscosité du mélange, de la pression de pulvérisation et de la durée d'application.

31. Procédé de réalisation d'un joint fileté tubulaire pour puits d'hydrocarbures comprenant les étapes suivantes :
a) usinage d'un élément fileté mâle et d'un élément fileté femelle comportant chacun un filetage destiné à coopérer avec celui de l'autre élément.
b) réalisation sur au moins un élément fileté d'un traitement destiné à adsorber ou absorber la substance lubrifiante à déposer à l'étape c) au niveau de la surface destinée à recevoir ladite substance lubrifiante.
c) dépôt d'une substance lubrifiante en couche mince d'épaisseur inférieure à 0,1 mm au moins au niveau de la surface des filets d'au moins l'un des filetages mâles et femelles des éléments filetés selon le procédé de la revendication 29 ou 30.
d) vissage en position d'assemblage de l'élément fileté mâle dans l'élément fileté femelle.

32. Procédé selon la revendication 31 **caractérisé en ce que** le traitement réalisé lors de l'étape b) est un traitement de phosphatation.

## Claims

1. A male or female threaded element (2) for a threaded tubular connection for hydrocarbon wells comprising a respective male or female threading (104, 204), a lubricating substance with a consistency capable of ensuring a self-fed lubrication regime and a film-forming nature being deposited at least on the surface (14, 16, 18, 20, 54, 56, 58, 60) of the threads (12, 52) of the threading and being constituted by a homogeneous mixture the lubricating and antigalling properties of which are defined by combining the 3 groups of the following compounds :
a) a thickening agent;
b) at least one extreme pressure additive, the extreme pressure additive or additives being physically and chemically compatible with the thickening agent and comprising at least one extreme pressure additive with a chemical action termed a chemical EP additive which is capable of use at Hertz pressures of 1000 MPa or more; and
c) an oil;
**characterized in that** the lubricating substance is deposited in a thin layer (22) with a thickness of less than 0,1 mm prior to any makeup of said threaded element with a corresponding female or male threaded element

2. A threaded element according to claim 1, **characterized in that** the lubricant substance is applied in the factory where the threaded element is manufactured.

3. A threaded element according to claim 1 or 2, **characterized in that** the chemical EP additive or additives and the thickening agent are soluble in the oil.

4. A threaded element according to any one of claims 1 to 3 , **characterized in that** the thickening agent contains chemical molecules of a marked polar nature.

5. A threaded element according to any one of claims 1 to 4, **characterized in that** the thickening agent is chemically stable up to a temperature of 120°C or more and preferably 160°C or more.

6. A threaded element according to any one of claims 1 to 5, **characterized in that** the thickening agent is an organic thickening agent.

7. A threaded element according to any one of claims 1 to 5, **characterized in that** the thickening agent is a mineral thickening agent.

8. A threaded element according to any one of claims 1 to 7, **characterized in that** the chemical EP additive or additives are selected from the group formed by sulfur-based or sulfur-containing chemical EP additives, those based on phosphorus, those based on sulfur and phosphorus, those based on chlorine and those based on modified or non modified esters or modified or non modified fatty acids or those based on complex esters.

9. A threaded element according to any one of claims 1 to 8, **characterized in that** the organic thickening agent is an oxidized petrolatum wax, **in that** a plurality of chemical EP additives is used, comprising a sulfur-containing product, an overbased sulphonate and a metallic dithiophosphate, and **in that** the oil is a mineral oil.

10. A threaded element according to any one of claims 1 to 9, **characterized in that** the EP additive or additives comprise at least one EP additive with a physical action.

11. A threaded element according to any one of claims 1 to 9, **characterized in that** the EP additive or additives is or are all of the type "with chemical action".

12. A threaded element according to any one of claims 1 to 11, **characterized in that** at least one of the EP additive or additives has anti-corrosion properties.

13. A threaded element according to any one of claims 1 to 12, **characterized in that** the total content of EP additives in the lubricating substance is in the range 5% to 50% by weight and preferably in the range 15% to 32 % by weight, and **in that** the EP additives include a plurality of chemical EP additives.

14. A threaded element according to claim 13, **characterized in that** the content of thickening agent in the lubricating substance is in the range 5% to 60% by weight and preferably in the range 8% to 40% by weight, and **in that** the content of oil in the lubricating substance is in the range 30% to 75 % by weight.

15. A threaded element according to claim 13, **characterized in that** the content of thickening agent in the lubricating substance is in the range 60% to 80% by weight, and **in that** the content of oil in the lubricating substance is in the range 5% to 20% by weight.

16. A threaded element according to any one of claims 1 to 12, **characterized in that** the chemical EP additive or additives comprise a chlorinated paraffin, the content of thickening agent in the lubricating substance is in the range 25% to 60% by weight, **in that** the total content of EP additives in the lubricating substance is in the range 40% to 75% by weight, and **in that** the content of oil in the lubricating substance is in the range 0.5% to 15% by weight.

17. A threaded element according to any one of claims 1 to 16, **characterized in that** the weight of the layer of lubricating substance is in the range 0.1 g/m² to 40 g/m².

18. A threaded element according to any one of claims 1 to 17, **characterized in that** the surface (14, 16, 18, 20, 54, 56, 58, 60) on which the lubricated substance is deposited is treated to adsorb or absorb said lubricating substance.

19. A threaded element according to claim 18, **characterized in that** said treated surface is the surface of a layer (32) selected from the group formed by phosphatation layers, oxalatation layers and metallic layers.

20. A threaded element according to any one of claims 1 to 18, **characterized in that** said treated surface (14, 16, 18, 20, 54, 56, 58, 60) is treated to endow said surface with a controlled roughness so as to adsorb or absorb the lubricating substance.

21. A threaded element according to any of claims 18 to 20, **characterized in that** said treated surface (14, 16, 18, 20, 54, 58, 56, 60) is treated to adsorb or absorb the lubricating substance over a depth in the range 0.003 mm to 0.080 mm.

22. A threaded element according to any one of claims 1 to 21, **characterized in that,** the threaded element comprising at least one sealing surface (208), the lubricating substance is also deposited in a thin layer (28) with a thickness of less than 0,1 mm on each sealing surface prior to any makeup of the threaded element with a corresponding threaded element.

23. A threaded element according to any one of claims 1 to 22, **characterized in that,** the threaded element comprising at least one makeup abutment (210), the lubricating substance is also deposited in a thin layer (30) with a thickness of less than 0,1 mm on each abutment surface prior to any makeup of the threaded element with a corresponding threaded element.

24. A threaded element according to claim 22 or claim 23, **characterized in that** all of the surfaces on which the lubricating substance is deposited as a thin layer are surfaces that are treated to adsorb or absorb the lubricating substance.

25. A threaded element according to any one of claims 1 to 24, **characterized in that** the lubricating substance moreover comprises less than 5% by weight of a

26. A threaded element according to any one of claims 1 to 25, **characterized in that** the lubricating substance does not release substances detrimental to the environment as for example lead or heavy metals.

27. A threaded tubular connection resistant to galling and comprising a male threaded element and a female threaded element, each of said threaded elements comprising a thread of the corresponding type, said threadings being made up one into the other to a connected position, **characterized in that** at least one of the two threaded elements is a threaded element according to any of claims 1 to 26.

28. A threaded tubular connection according to claim 27, **characterized in that** both threaded elements are threaded elements according to any of claims 1 to 26, only one of the threaded elements having a surface, on which the lubricating substance is deposited, treated according to any one of claims 18, 19, 20, 21 or 24.

29. A method for producing a thin layer with a thickness of less than 0,1 mm of a lubricating substance with a pasty consistency having a film-forming nature and being capable of ensuring a self-fed lubricating regime on a male or female threaded element of a tubular threaded connection for hydrocarbon wells, the threaded element comprising a respectively male or female threading according to the type of threaded element, said method comprising the following steps,
a) a homogeneous liquid mixture is prepared, formed by:
• a volatile solvent;
• a thickening agent;
• at least one extreme pressure additive, the extreme pressure additive or additives being physically and chemically compatible with the thickening agent and comprising at least one extreme pressure additive with a chemical action which is capable of use at Hertz pressures of 1000 MPa or more; and
• an oil;
the oil contents and the volatile solvent being selected for producing a liquid mixture with a convenient viscosity of the
b) a thin layer of said liquid mixture of determined substantially uniform thickness is applied to at least the surface of the threads of the threading, prior to any makeup of the threaded element with the corresponding female or male threaded element.
c) the volatile solvent is evaporated off or allowed to evaporate off.
the thickness of the layer of liquid mixture being determined so as to produce the desired thickness of the thin layer of lubricant surface after the volatile solvent is evaporated.

30. A method according to claim 29, **characterized in that** the application of the liquid mixture is produced by spraying through showerhead holes or by spraying under pressure, the thickness of the layer of liquid mixture applied being a function of the viscosity of the mixture, the spray pressure and the spray duration.

31. A method for making a threaded tubular connection for hydrocarbon wells comprising the following steps :
a) machining of a male threaded element and of a female threaded element each comprising a threading intended to cooperate with the threading of the other element
b) carrying out on at least one threaded element a treatment intended to adsorb or absorb the lubricating substance to be deposited in step c) on the surface on which said lubricating substance is to be applied.
c) deposit of a lubricating substance as a thin layer with a thickness less than 0,1 mm at least on the surface of the threads of al least the male and female threadings of the threaded elements according to the method of claim 29 or 30.
c) make up of the male threaded element in the female threaded element..

32. A method according to claim 31, **characterized in that** the carried out treatment during step b) is a phosphatation treatment.

## Patentansprüche

1. Einsteck- oder Aufnahmegewindeelement (2) einer Rohrgewindeverbindung für einen Kohlenwasserstoffbohrbrunnen, mit einem Außen- bzw. Innengewinde (104, 204), mit einer Schmiersubstanz mit einer Konsistenz, die geeignet ist, einen selbstgespeisten Schmierbetrieb und eine filmbildende Eigenschaft zu gewährleisten, die mindestens auf die Oberfläche (14, 16, 18, 20, 54, 56, 58, 60) der Gewindegänge (12, 52) des Gewindes aufgebracht wird und aus einer homogenen Mischung besteht, deren Schmier- und Gleitmitteleigenschaften durch die Kombination der 3 folgenden Gruppen von Verbindungen definiert werden:
a) ein Verdickungsmittel,
b) mindestens ein Extreme-Pressure-Additiv, wobei das oder die Extreme-Pressure-Additive physikalisch und chemisch mit dem Verdickungsmittel kompatibel sind und mindestens ein chemisch arbeitendes Extreme-Pressure-Additiv, chemisches EP-Additiv genannt, aufweisen, das für eine Verwendung bei Hertz-Drücken höher als oder gleich 1000 MPa geeignet ist, und
c) ein Öl,
**dadurch gekennzeichnet, dass** die Schmiersubstanz dort in dünner Schicht (22) mit einer Dicke von weniger als 0,1 mm vor jedem Verschrauben des Gewindeelements mit einem Gewindeelement vom entsprechenden Aufnahme- oder Einstecktyp aufgebracht wird.

2. Gewindeelement nach Anspruch 1, **dadurch gekennzeichnet, dass** die Schmiersubstanz in der Herstellungsfabrik des Gewindeelements aufgetragen wird.

3. Gewindeelement nach Anspruch 1 oder 2, **dadurch gekennzeichnet, dass** das oder die chemischen EP-Additive und das Verdickungsmittel öllöslich sind.

4. Gewindeelement nach einem der Ansprüche 1 bis 3, **dadurch gekennzeichnet, dass** das Verdickungsmittel chemische Moleküle mit markierter polarer Eigenschaft besitzt.

5. Gewindeelement nach einem der Ansprüche 1 bis 4, **dadurch gekennzeichnet, dass** das Verdickungsmittel bis zu einer Temperatur höher als oder gleich 120°C und vorzugsweise höher als oder gleich 160°C chemisch stabil ist.

6. Gewindeelement nach einem der Ansprüche 1 bis 5, **dadurch gekennzeichnet, dass** das Verdickungsmittel ein organisches Verdickungsmittel ist.

7. Gewindeelement nach einem der Ansprüche 1 bis 5, **dadurch gekennzeichnet, dass** das Verdickungsmittel ein mineralisches Verdickungsmittel ist.

8. Gewindeelement nach einem der Ansprüche 1 bis 7, **dadurch gekennzeichnet, dass** das oder die chemischen EP-Additive aus der Gruppe ausgewählt werden, die von den chemischen EP-Additiven auf der Basis von Schwefel oder Schwefel enthaltend, denjenigen auf der Basis von Phosphor, denjenigen auf der Basis von Schwefel und Phosphor, denjenigen auf der Basis von Chlor und denjenigen auf der Basis von Estern oder von modifizierten oder nicht modifizierten Fettsäuren oder auf der Basis von komplexen Estern gebildet wird.

9. Gewindeelement nach einem der Ansprüche 1 bis 8, **dadurch gekennzeichnet, dass** das organische Verdickungsmittel ein oxidiertes Petrolatumwachs ist, dass die chemischen EP-Additive mehrere sind, darunter ein geschwefeltes Produkt, ein überbasisches Sulfonat und ein metallisches Dithiophosphat, und dass das Öl ein Mineralöl ist.

10. Gewindeelement nach einem der Ansprüche 1 bis 9, **dadurch gekennzeichnet, dass** das oder die EP-Additive mindestens ein physikalisch arbeitendes EP-Additiv enthalten.

11. Gewindeelement nach einem der Ansprüche 1 bis 10, **dadurch gekennzeichnet, dass** das oder die EP-Additive alle vom "chemisch arbeitenden" Typ ist oder sind.

12. Gewindeelement nach einem der Ansprüche 1 bis 11, **dadurch gekennzeichnet, dass** mindestens eines des oder der EP-Additive korrosionsverhindernd ist.

13. Gewindeelement nach einem der Ansprüche 1 bis 12, **dadurch gekennzeichnet, dass** der Gesamtgehalt an EP-Additiven in der Schmiersubstanz zwischen 5 und 50 Gew.-% und vorzugsweise zwischen 15 und 32 Gew.-% liegt, und dass die EP-Additive mehrere chemische EP-Additive enthalten.

14. Gewindeelement nach Anspruch 13, **dadurch gekennzeichnet, dass** der Gehalt an Verdickungsmittel in der Schmiersubstanz zwischen 5 und 60 Gew.-% und vorzugsweise zwischen 8 und 40 Gew.-% liegt, und dass der Ölgehalt in der Schmiersubstanz zwischen 30 und 75 Gew.-% liegt.

15. Gewindeelement nach Anspruch 13, **dadurch gekennzeichnet, dass** der Gehalt an Verdickungsmittel in der Schmiersubstanz zwischen 60 und 80 Gew.-% liegt, und dass der Ölgehalt in der Schmiersubstanz zwischen 5 und 20 Gew.-% liegt.

16. Gewindeelement nach einem der Ansprüche 1 bis 12, **dadurch gekennzeichnet, dass,** wenn das oder die chemischen EP-Additive ein chloriertes Paraffin enthalten, der Gehalt an Verdickungsmittel in der Schmiersubstanz zwischen 25 und 60 Gew.-% liegt, dass der Gesamtgehalt an EP-Additiven in der Schmiersubstanz zwischen 40 und 75 Gew.-% liegt, und dass der Ölgehalt in der Schmiersubstanz zwischen 0,5 und 15 Gew.-% liegt.

17. Gewindeelement nach einem der Ansprüche 1 bis 16, **dadurch gekennzeichnet, dass** das Schichtgewicht der aufgebrachten Schmiersubstanz zwischen 0,1 g/m² und 40 g/m² liegt.

18. Gewindeelement nach einem der Ansprüche 1 bis 17, **dadurch gekennzeichnet, dass** die Oberfläche (14, 16, 18, 20, 54, 56, 58, 60), auf die die Schmiersubstanz aufgebracht wird, behandelt wird, um die Schmiersubstanz zu adsorbieren oder zu absorbieren.

19. Gewindeelement nach Anspruch 18, **dadurch gekennzeichnet, dass** die behandelte Oberfläche eine Schicht (32) ist, die aus der Gruppe ausgewählt wird, die aus den Phosphatierungsschichten, den Oxalatierungsschichten und den Metallschichten besteht.

20. Gewindeelement nach einem der Ansprüche 1 bis 18, **dadurch gekennzeichnet, dass** die behandelte Oberfläche (14, 16, 18, 20, 54, 56, 58, 60) behandelt wird, um der Oberfläche eine kontrollierte Rauheit zu verleihen, um die Schmiersubstanz zu adsorbieren oder zu absorbieren.

21. Gewindeelement nach einem der Ansprüche 18 bis 20, **dadurch gekennzeichnet, dass** die behandelte Oberfläche (14, 16, 18, 20, 54, 56, 58, 60) behandelt wird, um die Schmiersubstanz über eine Tiefe zu adsorbieren oder zu absorbieren, die zwischen 0,003 mm und 0,080 mm liegt.

22. Gewindeelement nach einem der Ansprüche 1 bis 21, **dadurch gekennzeichnet, dass,** wenn das Gewindeelement mindestens eine Dichtungsauflagerfläche (208) aufweist, die Schmiersubstanz vor jedem Verschrauben des Gewindeelements mit einem Gewindeelement des ihm entsprechenden Typs auch in dünner Schicht (28) einer Dicke von weniger als 0,1 mm auf jede Dichtungsauflagerfläche aufgebracht wird.

23. Gewindeelement nach einem der Ansprüche 1 bis 22, **dadurch gekennzeichnet, dass,** wenn das Gewindeelement mindestens einen Schraubanschlag (210) aufweist, die Schmiersubstanz vor jedem Verschrauben des Gewindeelements mit einem Gewindeelement des ihm entsprechenden Typs auch in dünner Schicht (30) einer Dicke von weniger als 0,1 mm auf jede Anschlagfläche aufgebracht wird.

24. Gewindeelement nach Anspruch 22 oder 23, **dadurch gekennzeichnet, dass** alle flächen, auf die die Schmiersubstanz in dünner Schicht aufgebracht wird, Schichten sind, die behandelt wurden, um die Schmiersubstanz zu adsorbieren oder zu absorbieren.

25. Gewindeelement nach einem der Ansprüche 1 bis 24, **dadurch gekennzeichnet, dass** die Schmiersubstanz außerdem weniger als 5 Gew.-% Farbstoff aufweist, der gegenüber Eigenschaften des Widerstands gegen das Festfressen inaktiv ist.

26. Gewindeelement nach einem der Ansprüche 1 bis 25, **dadurch gekennzeichnet, dass** die Schmiersubstanz keine umweltgefährdende Substanz freisetzt, wie zum Beispiel Blei oder Schwermetalle.

27. Rohrgewindeverbindung, die dem Festfressen widersteht und ein Einsteck-Gewindeelement und ein Aufnahme-Gewindeelement aufweist, wobei jedes dieser Gewindeelemente ein Gewinde vom entsprechenden Typ aufweist, wobei diese Gewinde in einer Zusammenbaustellung ineinander geschraubt werden, **dadurch gekennzeichnet, dass** mindestens eines der zwei Gewindeelemente ein Gewindeelement nach einem der Ansprüche 1 bis 26 ist.

28. Rohrgewindeverbindung nach Anspruch 27, **dadurch gekennzeichnet, dass** die zwei Gewindeelemente Gewindeelemente nach einem der Ansprüche 1 bis 28 sind, wobei nur eines der Gewindeelemente eine fläche aufweist, auf die die Schmiersubstanz aufgebracht wird, die nach einem der Ansprüche 18, 19, 20, 21 oder 24 behandelt wurde.

29. Verfahren zum Erhalt einer dünnen Schicht einer Dicke von weniger als 0,1 mm einer Schmiersubstanz von pastöser Konsistenz, die eine filmbildende Eigenschaft hat und geeignet ist, einen selbstgespeisten Schmierbetrieb auf einem Einsteck- oder Aufnahme-Gewindeelement einer Rohrgewindeverbindung für Kohlenwasserstoffbohrbrunnen zu gewährleisten, wobei das Gewindeelement ein Außen- bzw. Innengewinde je nach dem Typ des Gewindeelements aufweist, wobei das Verfahren die folgenden Phasen enthält:
a) es wird eine homogene flüssige Mischung hergestellt aus:
- einem flüssigen Lösungsmittel,
- einem Verdickungsmittel,
- mindestens einem Extreme-Pressure-Additiv, wobei das oder die Extreme-Pressure-Additive physikalisch und chemisch mit dem Verdickungsmittel kompatibel sind und mindestens ein chemisch arbeitendes Extreme-Pressure-Additiv aufweisen, das für eine Nutzung bei Hertz-Drücken von mehr als oder gleich 1000 MPa geeignet ist, und
- ein Öl,
wobei die Gehalte an Öl und an flüssigem Lösungsmittel gewählt werden, um eine geeignete Viskosität der flüssigen Mischung zu erhalten;
b) mindestens auf die Oberfläche der Gewindegänge des Gewindes vor jedem Verschrauben des Gewindeelements mit einem Aufnahme- oder Einsteck-Gewindeelement entsprechenden Typs eine dünne Schicht der flüssigen Mischung in einer im Wesentlichen gleichmäßigen bestimmten Dicke aufgetragen wird;
c) man das flüssige Lösungsmittel verdunsten lässt oder zum Verdunsten bringt,
wobei die Dicke der ursprünglichflüssigen Mischungsschicht bestimmt wird, um die gewünschte Dicke der dünnen Schicht von Schmiersubstanz nach dem Verdunsten des flüchtigen Lösungsmittels zu erhalten.

30. Verfahren nach Anspruch 29, **dadurch gekennzeichnet, dass** das Auftragen einer flüssigen Mischung durch ein Besprühen durch die Löcher einer Dusche oder durch eine Zerstäubung unter Druck erhalten wird, wobei die Schichtsdicke der aufgetragenen flüssigen Mischung von der Viskosität der Mischung, dem Zerstäubungsdruck und der Auftragdauer abhängt.

31. Verfahren zur Herstellung einer Rohrgewindeverbindung für einen Kohlenwasserstoffbohrbrunnen, das die folgenden Schritte aufweist:
a) Bearbeiten ein Einsteck-Gewindeelement und ein Aufnahme-Gewindeelement, die je ein Gewinde aufweisen, das dazu bestimmt ist, mit demjenigen des anderen Elements zusammenzuwirken,
b) Durchführen auf mindestens einem Gewindeelement eine Behandlung, die dazu bestimmt ist, die Schmiersubstanz zu adsorbieren oder zu absorbieren, die im Schritt c) auf die Oberfläche aufzubringen ist, und die dazu bestimmt ist, die Schmiersubstanz zu empfangen,
c) Aufbringen einer Schmiersubstanz in einer dünnen Schicht einer Dicke von weniger als 0,1 mm zumindest auf die Oberfläche der Gewindegänge mindestens eines der Einsteck- oder Aufnahmegewinde der Gewindeelemente gemäß dem Verfahren des Anspruchs 29 oder 30,
d) Schrauben in der Zusammenbaustellung des Einsteck-Gewindeelements in das Aufnahme-Gewindeelement.

32. Verfahren nach Anspruch 31, **dadurch gekennzeichnet, dass** die im Schritt b) durchgeführte Behandlung eine Phosphatierungsbehandlung ist.
